# EUROPEAN PATENT SPECIFICATION

(11) **EP 1 982 539 B1**
(45) Date of publication and mention of the grant of the patent: **20.12.2017**
(21) Application number: 07762700.8
(22) Date of filing: 31.01.2007
(51) Int. Cl.: H04L 29/12, H04M 3/42, H04W 8/26, H04W 8/28, H04W 4/20, H04W 60/00, H04W 92/02, H04W 92/16

(54) **METHOD AND SYSTEM FOR PROVIDING MOBILE COMMUNICATION CORRESPONDING TO MULTIPLE MSISDNS ASSOCIATED WITH A SINGLE IMSI**
VERFAHREN UND SYSTEM ZUR BEREITSTELLUNG VON MOBILER KOMMUNIKATION NACH MIT EINZEL-IMSI ASSOZIIERTEN MEHRFACH-MSISDNS
PROCÉDÉ ET SYSTÈME ASSURANT UNE COMMUNICATION MOBILE CORRESPONDANT À DE MULTIPLES MSISDNS ASSOCIÉES À UN SEUL IMSI

(30) Priority: 31.01.2006 US 764032 P
(43) Date of publication of application: 22.10.2008
(73) Proprietor: GlobeTouch, Inc., Oakland, CA 94607 (US)
(72) Inventor: JIANG, John, Danville, CA 94506 (US)
(74) Representative: CMS Cameron McKenna Nabarro Olswang LLP
(86) International application number: PCT/US2007/002607
(87) International publication number: WO 2007/089822

(56) References cited:
- US-A1- 2003 199 281
- US-A1- 2004 242 243
- US-A1- 2005 075 106
- US-A1- 2005 192 035
- US-A1- 2005 192 035

## Description

### Field of the Invention

The present invention generally relates to mobile communication. More specifically, the invention relates to mobile communication corresponding to multiple Mobile Station International Subscriber Directory Numbers (MSISDNs) associated with a single International Mobile Subscriber Identity (IMSI).

### Background of the Invention

Mobile communication services are becoming increasingly popular. Hence, there is a competition between different mobile operators for increasing their roaming revenues. The mobile subscribers, who frequently roam between two or more countries, contribute a majority of this roaming revenue. These mobile subscribers frequently roam between their home networks and one or more visited networks. The home network and the visited networks can be in the same country, or may be present in different countries. A local Mobile Station International Subscriber Directory Number (MSISDN) of each of the visited networks allows the roaming subscribers to call local subscribers of the visited networks at cheaper local rates instead of expensive roaming rates. In addition, the local subscribers of the visited networks can call the roaming subscribers at the local rates. Typically, a roaming subscriber buys Subscriber Identity Modules (SIM) cards of the visited networks to get local rates dialing. However, the roaming subscriber needs to swap his original SIM card with a SIM card of currently visited network and hence, may not be able to receive call-related and non-call related services on his home network MSISDN. In addition, when the roaming subscriber is back in the home network, he cannot receive the call-related and non call-related services on his other MSISDNs of the visited networks. Therefore, it is desirable to facilitate mobile communication corresponding to the home network MSISDN and the other MSISDNs of the visited networks of the roaming subscriber.

One technique offers a service to the roaming subscribers of a Home Public Mobile Network (HPMN), where the roaming subscriber enjoys local rates in one or more Friendly Public Mobile Networks (FPMNs) with corresponding one or more FPMN MSISDNs, in addition to receiving the call-related and the non call-related services on an HPMN MSISDN. The FPMNs are one or more public mobile networks, with which the HPMN has a roaming relationship. The service utilizes a multiple International Mobile Subscriber Identity (IMSI) SIM card. The multiple SIM card contains an HPMN IMSI and FPMN IMSIs, as well as the HPMN MSISDN and FPMN MSISDNs associated with the HPMN IMSI and FPMN IMSIs, respectively. The multiple-IMSI SIM card needs to have an SIM Tool-Kit (STK) application, which automatically detects the current location of the roaming subscriber and selects the appropriate IMSI and corresponding MSISDN. However, in order to subscribe to this service, the roaming subscriber needs to procure a multiple-IMSI SIM card, and replace his original HPMN SIM card.

In another technique to provide this service to the roaming subscriber, the HPMN reserves a special range of HPMN IMSIs to provide the service. Again, in order to subscribe to this service, the roaming subscriber must buy a special HPMN SIM card with a corresponding HPMN IMSI, belonging to the special HPMN IMSI range. The HPMN assigns one or more FPMN MSISDNs to the roaming subscriber, upon subscription, and associates the FPMN MSISDNs with the HPMN MSISDN. The HPMN activates the service, once the roaming subscriber replaces his existing HPMN SIM card with the special HPMN SIM card.

According to another technique to provide the service, the roaming subscriber carries a special SIM card that contains an HPMN IMSI and a SIM Tool-Kit (STK) application. The technique employs a distributed network of nodes for handling the service. When the roaming subscriber registers with an FPMN with the HPMN IMSI in a first registration, the STK application informs an FPMN node about the roaming subscriber's location and an HPMN node. The FPMN node then sends an FPMN IMSI and a corresponding FPMN MSISDN to the roaming subscriber's SIM card. The STK causes the handset to initiate a second registration with the FPMN IMSI. Thereafter, the FPMN node informs the HPMN node about the roaming subscriber, i.e. the roaming subscriber's location, the FPMN IMSI, and the FPMN MSISDN. Consequently, the roaming subscriber enjoys local rate benefit in the FPMN. The FPMN node and the HPMN node coordinate to handle call and SMS services on either an HPMN MSISDN or an FPMN MSISDN. However, this technique uses a distributed network of nodes consisting of a node in the HPMN and a node in each of the FPMNs. Further, the subscriber registers twice with the FPMN, once with HPMN IMSI and secondly with FPMN IMSI. Furthermore, the roaming subscriber needs to replace his original SIM card with the special SIM card containing the complex STK application.

One or more of the above techniques are inconvenient for the roaming subscriber, as the roaming subscriber needs to replace his existing HPMN SIM card. Hence, there is a need in the art for a solution for facilitating mobile communication corresponding to multiple MSISDNs associated with an HPMN IMSI of the subscriber, without changing the existing HPMN SIM.

US Patent Application Publication US 2005/0192035 A1 describes a system and method that supports many MSISDNs on a mobile device. The system includes at least one signal gateway that supports the use of numerous MSISDN numbers by the mobile device.

### Summary

The present invention generally relates to a method according to claim 1, a computer program product according to claim 14, and a system according to claim 15. Further embodiments are disclosed in the dependent claims. Further aspects of the invention are set out in the following clauses:
1. A method for mobile communications, the method comprising: receiving a subscription activation message from a subscriber at a Signaling Gateway (SG), the subscriber being associated with a Home Public Mobile Network (HPMN) and having a HPMN Subscriber Identity Module (SIM) with a corresponding HPMN International Mobile Subscriber Identity (IMSI) and a corresponding HPMN Mobile Station International Subscriber Directory Number (MSISDN); assigning one or more MSISDNs to the subscriber based on the subscription activation message; and associating the one or more MSISDNs with the HPMN MSISDN to facilitate mobile communications corresponding to the one or more MSISDNs assigned to the subscriber.
2. The method of clause 1, further comprising: storing the association of the one or more MSISDNs with the HPMN MSISDN in a subscription data repository accessible by the SG.
3. The method of clause 1, wherein each of the one or more MSISDNs corresponds to one or more Friendly Public Mobile Networks (FPMNs).
4. The method of clause 1, wherein the HPMN has a Home Location Register (HLR), the method further comprising: issuing, at the SG, a routing query to the HPMN HLR for retrieving the HPMN IMSI corresponding to the subscriber.
5. The method of clause 1, wherein the subscription activation message is selected from a group consisting of a Short Message Service (SMS) message, an Unstructured Supplementary Service Data (USSD) message, a customer care call, a Wireless Application Protocol (WAP) interaction, a World Wide Web interaction, and an Interactive Voice Response (IVR) message.
6. The method of clause 1, wherein the subscription activation message is received from one of the one or more FPMNs.
7. The method of clause 6, wherein the one of the one or more FPMNs is coupled to a Visited Location Register (VLR) and a Serving General packet radio service Support Node (SGSN), the method further comprising: issuing, at the SG, a cancel registration message to at least one selected from the group consisting of the VLR and the SGSN.
8. The method of clause 1, wherein the subscription activation message is received from a Visited Public Mobile Network (VPMN).
9. The method of clause 3, further comprising: receiving, at the SG, mobile communications originating at the HPMN, directed to the one or more FPMNs.
10. The method of clause 9, wherein the mobile communications include a Signaling Connection and Control Part (SCCP) message.
11. The method of clause 3, wherein the SG has an address, the method further comprising: registering the subscriber with one of the one or more FPMNs; receiving a mobile communication from the subscriber, the mobile communication having a calling party address; and replacing the calling party address with the SG address, wherein the SG address is associated with the HPMN.
12. The method of clause 3, wherein the SG has an address, the method further comprising: registering the subscriber with one of the one or more FPMNs; receiving a mobile communication from the subscriber, the mobile communication having a location address; and replacing the location address with the SG address, wherein the SG address is associated with the HPMN.
13. The method of clause 12, wherein the location address is selected from a group consisting of a VLR address, a Visited Mobile Switching Center (VMSC) address, and an SGSN address.
14. The method of clause 3, wherein the subscriber has a Customized Applications for Mobile networks Enhanced Logic (CAMEL) profile at the HPMN, the method further comprising: facilitating receipt of the subscriber CAMEL profile at the SG; wherein the subscriber is registered at one of the one or more FPMNs; and wherein the subscriber is a pre-paid subscriber.
15. A computer program product comprising a computer usable medium having control logic stored therein for causing a computer to perform mobile communications, the control logic comprising computer readable program code means for: receiving a subscription activation message from a subscriber at a Signaling Gateway (SG), the subscriber being associated with a Home Public Mobile Network (HPMN) and having a HPMN Subscriber Identity Module (SIM) with a corresponding HPMN International Mobile Subscriber Identity (IMSI) and a corresponding HPMN Mobile Station International Subscriber Directory Number (MSISDN); assigning one or more MSISDNs to the subscriber based on the subscription activation message; and associating the one or more MSISDNs with the HPMN MSISDN to facilitate mobile communications corresponding to the one or more MSISDNs assigned to the subscriber.
16. The computer program product of clause 1, further comprising: storing the association of the one or more MSISDNs with the HPMN MSISDN in a subscription data repository accessible by the SG.
17. The computer program product of clause 1, wherein each of the one or more MSISDNs corresponds to one or more Friendly Public Mobile Networks (FPMNs).
18. The computer program product of clause 1, wherein the HPMN has a Home Location Register (HLR), the control logic further comprising: issuing, at the SG, a routing query to the HPMN HLR for retrieving the HPMN IMSI corresponding to the subscriber.
19. The computer program product of clause 1, wherein the subscription activation message is selected from a group consisting of a Short Message Service (SMS) message, an Unstructured Supplementary Service Data (USSD) message, a customer care call, a Wireless Application Protocol (WAP) interaction, a World Wide Web interaction, and an Interactive Voice Response (IVR) message.
20. The computer program product of clause 1, wherein the subscription activation message is received from one of the one or more FPMNs.
21. The computer program product of clause 20, wherein the one of the one or more FPMNs is coupled to a Visited Location Register (VLR) and a Serving General packet radio service Support Node (SGSN), the control logic further comprising: issuing, at the SG, a cancel registration message to at least one selected from the group consisting of the VLR and the SGSN.
22. The computer program product of clause 1, wherein the subscription activation message is received from a Visited Public Mobile Network (VPMN).
23. The computer program product of clause 22, the control logic further comprising: receiving, at the SG, mobile communications originating at the HPMN, directed to the one or more FPMNs.
24. The computer program product of clause 17, wherein the mobile communications include a Signaling Connection and Control Part (SCCP) message.
25. The computer program product of clause 17, wherein the SG has an address, the computer program product further comprising: registering the subscriber with one of the one or more FPMNs; receiving a mobile communication from the subscriber, the mobile communication having a calling party address; and replacing the calling party address with the SG address, wherein the SG address is associated with the HPMN.
26. The computer program product of clause 17, wherein the SG has an address, the computer program product further comprising: registering the subscriber with one of the one or more FPMNs; receiving a mobile communication from the subscriber, the mobile communication having a location address; and replacing the location address with the SG address, wherein the SG address is associated with the HPMN.
27. The computer program product of clause 17, wherein the location address is selected from a group consisting of a VLR address, a Visited Mobile Switching Center (VMSC) address, and an SGSN address.
28. The computer program product of clause 17, wherein the subscriber has a Customized Applications for Mobile networks Enhanced Logic (CAMEL) profile at the HPMN, the computer program product further comprising: facilitating receipt of the subscriber CAMEL profile at the SG; wherein the subscriber is registered at one of the one or more FPMNs; and wherein the subscriber is a pre-paid subscriber.
29. A system for mobile communications, the system comprising: receiving a subscription activation message from a subscriber at a Signaling Gateway (SG), the subscriber being associated with a Home Public Mobile Network (HPMN) and having a HPMN Subscriber Identity Module (SIM) with a corresponding HPMN International Mobile Subscriber Identity (IMSI) and a corresponding HPMN Mobile Station International Subscriber Directory Number (MSISDN); assigning one or more MSISDNs to the subscriber based on the subscription activation message; and associating the one or more MSISDNs with the HPMN MSISDN to facilitate mobile communications corresponding to the one or more MSISDNs assigned to the subscriber.
30. The system of clause 1, further comprising: storing the association of the one or more MSISDNs with the HPMN MSISDN in a subscription data repository accessible by the SG.
31. The system of clause 1, wherein each of the one or more MSISDNs corresponds to one or more Friendly Public Mobile Networks (FPMNs).
32. The system of clause 1, wherein the HPMN has a Home Location Register (HLR), the system further comprising: issuing, at the SG, a routing query to the HPMN HLR for retrieving the HPMN IMSI corresponding to the subscriber.
33. The system of clause 1, wherein the subscription activation message is selected from a group consisting of a Short Message Service (SMS) message, an Unstructured Supplementary Service Data (USSD) message, a customer care call, a Wireless Application Protocol (WAP) interaction, a World Wide Web interaction, and an Interactive Voice Response (IVR) message.
34. The system of clause 1, wherein the subscription activation message is received from one of the one or more FPMNs.
35. The system of clause 34, wherein the one of the one or more FPMNs is coupled to a Visited Location Register (VLR) and a Serving General packet radio service Support Node (SGSN), the system further comprising: issuing, at the SG, a cancel registration message to at least one selected from the group consisting of the VLR and the SGSN.
36. The system of clause 1, wherein the subscription activation message is received from a Visited Public Mobile Network (VPMN).
37. The system of clause 36, further comprising: receiving, at the SG, mobile communications originating at the HPMN, directed to the one or more FPMNs.
38. The system of clause 37, wherein the mobile communications include a Signaling Connection and Control Part (SCCP) message.
39. The system of clause 31, wherein the SG has an address, the system further comprising: registering the subscriber with one of the one or more FPMNs; receiving a mobile communication from the subscriber, the mobile communication having a calling party address; and replacing the calling party address with the SG address, wherein the SG address is associated with the HPMN.
40. The system of clause 31, wherein the SG has an address, the system further comprising: registering the subscriber with one of the one or more FPMNs; receiving a mobile communication from the subscriber, the mobile communication having a location address; and replacing the location address with the SG address, wherein the SG address is associated with the HPMN.
41. The system of clause 40, wherein the location address is selected from a group consisting of a VLR address, a Visited Mobile Switching Center (VMSC) address, and an SGSN address.
42. The system of clause 31, wherein the subscriber has a Customized Applications for Mobile networks Enhanced Logic (CAMEL) profile at the HPMN, the system further comprising: facilitating receipt of the subscriber CAMEL profile at the SG; wherein the subscriber is registered at one of the one or more FPMNs; and wherein the subscriber is a pre-paid subscriber.

### Brief description of drawings

FIG. 1 illustrates a system for facilitating signaling corresponding to multiple Mobile Station International Subscriber Directory Numbers (MSISDNs) associated with a subscriber of a Home Public Mobile Network (HPMN) with a corresponding HPMN International Mobile Subscriber Identity (IMSI), in accordance with an embodiment of the present invention.
FIG. 2 illustrates a system block diagram for providing fail-over support to a subscriber registered in a Friendly Public Mobile Network (FPMN), in accordance with an embodiment of the present invention.
FIG. 3 is a flow chart for facilitating signaling corresponding to multiple MSISDNs associated with a subscriber of an HPMN with a corresponding HPMN IMSI, in accordance with an embodiment of the present invention.
FIG. 4 is a signal flow diagram representing a Short Message Service (SMS) as a subscription activation message from a subscriber registered in an FPMN for facilitating signaling corresponding to an HPMN MSISDN and an FPMN MSISDN of the subscriber, in accordance with an embodiment of the present invention.
FIG. 5 is a signal flow diagram for a registration message from a post-paid subscriber registering in an FPMN, in accordance with an embodiment of the present invention.
FIG. 6 is a signal flow diagram for a registration message from a pre-paid subscriber registering in an FPMN, in accordance with an embodiment of the present invention.
FIG. 7 is a signal flow diagram for a data restore message from a post-paid subscriber registered in an FPMN, in accordance with an embodiment of the present invention.
FIG. 8 is a signal flow diagram for a data restore message from a pre-paid subscriber registered in an FPMN, in accordance with an embodiment of the present invention.
FIG. 9 is a signal flow diagram for a General Packet Radio Service (GPRS) registration message from a subscriber registering in an FPMN, in accordance with an embodiment of the present invention.
FIG. 10 is a signal flow diagram representing a mobile originated call from a post-paid subscriber registered in an FPMN, in accordance with an embodiment of the present invention.
FIGS. 11A and 11B represent a signal flow diagram for a mobile originated call from a pre-paid subscriber registered in an FPMN, in accordance with an embodiment of the present invention.
FIGS. 12A and 12B represent a signal flow diagram for a mobile originated call from a pre-paid subscriber registered in an FPMN, in accordance with another embodiment of the present invention.
FIG. 13 is a signal flow diagram representing a mobile terminated call to an HPMN-MSISDN of a post-paid subscriber registered in an FPMN, in accordance with an embodiment of the present invention.
FIGS. 14A and 14B represent a signal flow diagram for a mobile terminated call to an HPMN-MSISDN of a pre-paid subscriber registered in an FPMN, in accordance with an embodiment of the present invention.
FIGS. 15A and 15B represent a signal flow diagram for a mobile terminated call to an FPMN-MSISDN of a post-paid subscriber registered in an FPMN, in accordance with an embodiment of the present invention.
FIGS. 16A, 16B, and 16C represent a signal flow diagram for a mobile terminated call to an FPMN-MSISDN of a pre-paid subscriber registered in an FPMN, in accordance with an embodiment of the present invention.
FIGS. 17A and 17B represent a signal flow diagram for a mobile terminated call to an FPMN-MSISDN of a post-paid subscriber registered in a Visited Public Mobile Network (VPMN), in accordance with an embodiment of the present invention.
FIGS. 18A, 18B and 18C represent a signal flow diagram for a mobile terminated call to an FPMN-MSISDN of a pre-paid subscriber registered in a VPMN, in accordance with an embodiment of the present invention.
FIG. 19 is a signal flow diagram representing a mobile originated Short Message Service (SMS) from a subscriber registered in an FPMN, in accordance with an embodiment of the present invention.
FIG. 20 is a signal flow diagram representing a mobile terminated SMS to an HPMN-MSISDN of a subscriber registered in an FPMN, in accordance with an embodiment of the present invention.
FIG. 21 is a signal flow diagram representing a mobile terminated SMS to an FPMN-MSISDN of a subscriber registered in an FPMN, in accordance with an embodiment of the present invention.
FIG. 22 is a signal flow diagram representing a mobile terminated SMS to an FPMN-MSISDN of a subscriber registered in a VPMN, in accordance with an embodiment of the present invention.
FIG. 23 is a signal flow diagram representing a mobile terminated Multimedia Messaging Service (MMS) to an FPMN-MSISDN of a subscriber registered in an FPMN, in accordance with an embodiment of the present invention.

### Detailed description

In the following description, for purposes of explanation, specific numbers, materials and configurations are set forth in order to provide a thorough understanding of the invention.

The present invention proposes a system for providing a service to facilitate mobile communication corresponding to multiple Mobile Station International Subscriber Directory Numbers (MSISDNs) of a subscriber of a Home Public Mobile Network (HPMN). The subscriber has an HPMN Subscriber Identity Module (SIM) with a corresponding HPMN International Mobile Subscriber Identity (IMSI), hereinafter referred to as an IMSI-H, and an HPMN Mobile Station International Subscriber Directory Number (MSISDN), hereinafter referred to as an MSISDN-H. The service is, hereinafter, referred to as a Single IMSI Multiple MSISDN (SIMM) service and the system is, hereinafter, referred to as an SIMM system. Furthermore, the subscriber is, interchangeably, referred to as an SIMM subscriber. The HPMN forms a special friendly roaming relationship with one or more Public Mobile Networks (PMNs), hereinafter referred to as Friendly Public Mobile Networks (FPMNs), to offer the SIMM service to the subscriber, when the subscriber is registered in the FPMNs. The subscriber enjoys local number benefits in the FPMNs. For providing the SIMM service, the FPMNs allocate a pre-defined range of MSISDNs to the HPMN. Upon subscription to the SIMM service, the subscriber is assigned one or more MSISDNs corresponding to the FPMNs. The one or more MSISDNs belong to the pre-defined range of MSISDNs. The one or more MSISDNs may be assigned to the SIMM subscribers permanently or temporarily.

The FPMNs and the HPMN settle billing using Call Detail Records (CDRs) that include any FPMN MSISDN from the pre-defined range of FPMN MSISDNs. In an embodiment of the present invention, the FPMNs define a special Inter-operator Tariff (IOT) for the SIMM subscriber. The HPMN provides information about the SIMM subscriber to an FPMN data-clearing house, or to the FPMNs for special billing processing. Alternatively, the FPMNs do not change the IOT and apply a normal Transfer Accounting Procedure (TAP). The HPMN may provide discount to the SIMM subscriber in roaming charges in the FPMNs and claim the discount from the FPMNs. The SIMM subscriber may pay a monthly subscription fee and get the discount for each month of the SIMM service used. Different subscription fees may be charged depending on whether the one or more MSISDNs are assigned to the SIMM subscriber permanently or temporarily.

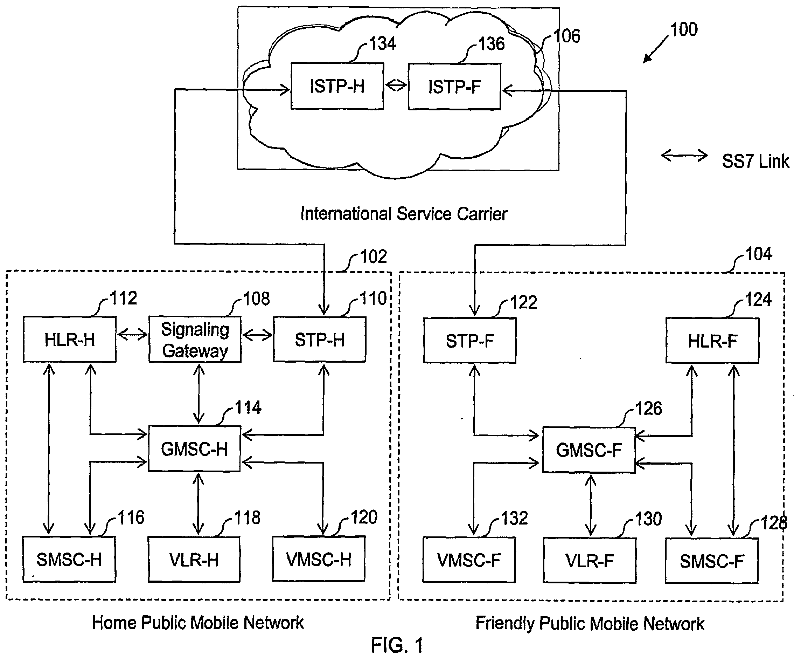

FIG. 1 illustrates a system 100 for providing the SIMM service corresponding to the MSISDN-H and a second MSISDN associated with the subscriber having the IMSI-H, in accordance with an embodiment of the present invention. Hereinafter, system 100 may, interchangeably, be referred to as the SIMM system. The MSISDN-H corresponds to an HPMN 102. The second MSISDN corresponds to an FPMN 104 and is, hereinafter, referred to as an MSISDN-F. The MSISDN-F belongs to a pre-defined range of FPMN MSISDNs allocated by FPMN 104. In an embodiment of the present invention, HPMN 102 and FPMN 104 reside in the same country. In another embodiment of the present invention, HPMN 102 and FPMN 104 reside in different countries. An International Service Carrier (ISC) 106 couples HPMN 102 and FPMN 104, when HPMN 102 and FPMN 104 reside in different countries. FPMN 104 may be a Mobile Virtual Network Operator (MVNO). In addition, FPMN 104 may be a partner network of the MVNO and residing in same country as the MNVO.

System 100 includes a Signaling Gateway (SG) 108. In an embodiment of the present invention, SG 108 resides in HPMN 102. In another embodiment of the present invention, SG 108 resides in FPMN 104. System 100 further includes in HPMN 102, a Signal Transfer Point (STP) 110, a Home Location Register (HLR) 112, a Gateway Mobile Switching Center (GMSC) 114, a Short Message Service Center (SMSC) 116, a Visited Location Register (VLR) 118, and a Visited Mobile Switching Center (VMSC) 120. Since, STP 110, HLR 112, GMSC 114, SMSC 116, VLR 118, and VMSC 120 reside in HPMN 102, they are hereinafter, referred to as an STP-H 110, an HLR-H 112, a GMSC-H 114, an SMSC-H 116, a VLR-H 118, and a VMSC-H 120, respectively. SG 108, STP-H 110, HLR-H 112, GMSC-H 114, SMSC-H 116, VLR-H 118, and VMSC-H 120 are interconnected, and communicate with each other over a Signaling System #7 (SS7) link.

System 100 further includes in FPMN 104, an STP 122, an HLR 124, a GMSC 126, an SMSC 128, a VLR 130, and a VMSC 132. Since, STP 122, HLR 124, GMSC 126, SMSC 128, VLR 130, and VMSC 132 reside in FPMN 104, they are hereinafter, referred to as an STP-F 122, an HLR-F 124, a GMSC-F 126, an SMSC-F 128, a VLR-F 130, and a VMSC-F 132, respectively. STP-F 122, HLR-F 124, GMSC-F 126, SMSC-F 128, VLR-F 130, and VMSC-F 132 are interconnected, and communicate with each other over an SS7 link. It would be apparent to a person skilled in the art, that HPMN 102 and FPMN 104 may also include various other network elements (not shown in FIG. 1), depending on the architecture under consideration.

System 100 further includes a first International STP (ISTP) 134 and a second ISTP 136. First ISTP 134 and second ISTP 136 reside in ISC 106. First ISTP 134 communicates with STP-H 110 over an SS7 link and is, hereinafter, referred to as ISTP-H 134. Second ISTP 136 communicates with STP-F 122 over an SS7 link and is, hereinafter, referred to as ISTP-F 136. ISTP-H 134 and ISTP-F 136 communicate with each other using an SS7 link.

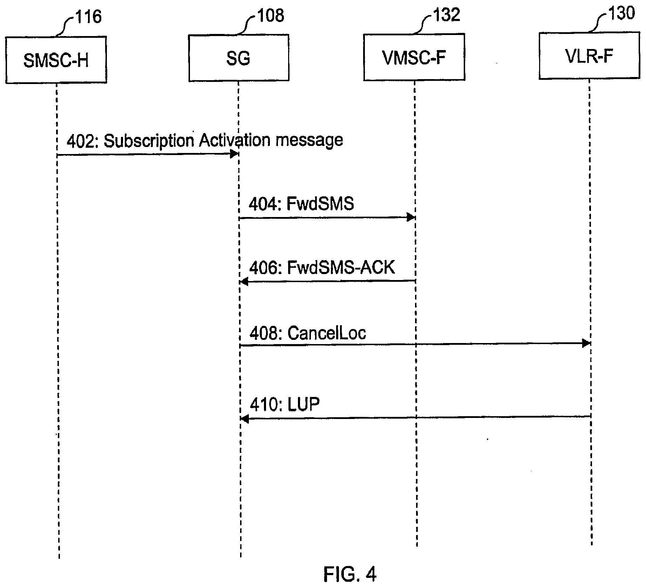

SG 108 assigns the MSISDN-F to the subscriber, upon receiving a subscription activation message from the subscriber at SG 108. In an embodiment of the present invention, SG 108 assigns the MSISDN-F to the subscriber temporarily. In another embodiment of the present invention, SG 108 assigns the MSISDN-F to the subscriber permanently. SG 108 issues a routing query to HLR-H 112 to get the IMSI-H associated with the subscriber. Thereafter, SG 108 creates an association of the MSISDN-F with the MSISDN-H, and maintains the association in a subscription database coupled to SG 108. In an embodiment of the present invention, the subscription database resides within SG 108. The subscriber can send the subscription activation message from either HPMN 102, or FPMN 104, or a Visited Public Mobile Network (VPMN). The VPMN refers to a Public Mobile Network (PMN), with which HPMN 102 has no relationship to provide the SIMM service. The subscription activation message is one of, but not limited to, a Short Message Service (SMS) message, an Unstructured Supplementary Service Data (USSD) message, a customer care call, a Wireless Application Protocol (WAP) interaction, a web interaction and an Interactive Voice Response (IVR) message. Various embodiments of signal flow corresponding to the subscription activation message are described in conjunction with FIG. 4.

Furthermore, HPMN 102 allocates a range of HPMN Global Titles (GT) to SG 108, hereinafter, referred to as SG GT. SG 108 maps the SG GT to network elements of FPMN 104. In addition, SG 108 maps the SG GT to network elements of FPMN 104, and network elements of one or more VPMNs present in the same country as FPMN 104, in accordance with an embodiment of the present invention. The mapping of the SG GT with the network elements can be either permanent or built dynamically. In an embodiment of the present invention, HPMN 102 may allocate a single SG GT to SG 108. SG 108, then, post-fixes a plurality of digits to the SG GT.

SG 108 receives signaling messages originating from roaming subscribers of HPMN 102, currently roaming in FPMN 104, in accordance with an embodiment of the present invention. In another embodiment of the present invention, SG 108 receives signaling messages originating from roaming subscribers of HPMN 102, currently roaming in FPMN 104 or in one or more VPMNs. The signaling messages include Signaling Connection and Control Part (SCCP) messages. To achieve this, STP-H 110 is configured to set a Destination Point Code (DPC) in the signaling messages, with Calling Party Address (CgPA) equal to a global title of a network element of FPMN 104, to the SG GT using Global Title Translation (GTT) table for Translation Type (TT) equal to zero. Thus, STP-H 110 routes the signaling messages originating from roaming subscribers of HPMN 102 currently roaming in FPMN 104. In an embodiment of the present invention, ISTP-H 134 routes the signaling messages from the roaming subscribers of HPMN 102 in FPMN 104, to SG 108. In another embodiment of the present invention, STP-F 122 routes the signaling messages to SG 108, by appending an HPMN prefix, corresponding to HPMN 102, to a Called Party Address (CdPA) of the signaling messages, so that STP-H 110 routes the signaling messages with the HPMN prefix to the SG GT.

If one or more subscribers of the roaming subscribers are subscribers of the SIMM service, SG 108 replaces the CgPA with an address of SG 108. In an embodiment of the present invention, the address of SG 108 is a global title corresponding to the network element of FPMN 104, denoted in the mapping of the SG GT and the network elements of FPMN 104. In addition, SG 108 changes the TT to 32 and sends the signaling messages to STP-H 110. STP-H 110 routes the signaling messages to network elements, as indicated in a CdPA, after performing GTT for the TT equal to 32 and sets the TT to zero. If one or more subscribers of the roaming subscribers are not subscribers of the SIMM service, SG 108 maintains the original CgPA and relays the signaling messages to STP-H 110 with the TT set to 32.

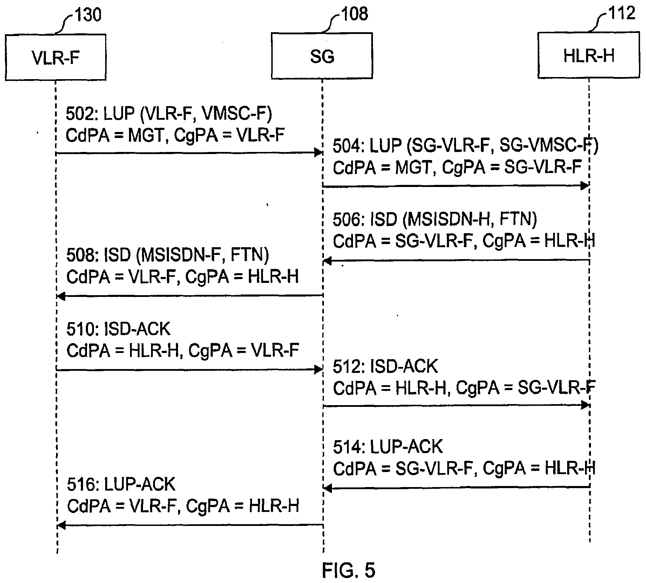

Furthermore, SG 108 replaces one or more location addresses in a registration message from the SIMM subscribers, with one or more addresses of SG 108, when the subscriber is registering in FPMN 104. The registration message includes a Location Update (LUP) message and a General Packet Radio Service LUP (GPRS LUP) message. The one or more location addresses include an address of VLR-F 130, an address of VMSC-F 132, and an address of a Serving GPRS Support Node (SGSN-F) in FPMN 104. The one or more addresses of SG 108 are global titles corresponding to VLR-F 130, VMSC-F 132, and the SGSN-F, respectively, based on the mapping of the SG GT with the network elements of FPMN 104. The addresses of SG 108 corresponding to VLR-F 130, VMSC-F 132, and the SGSN-F are, hereinafter, referred to as an SG-VLR-F, an SG-VMSC-F, and an SG-SGSN-F, respectively. Since the SG-VLR-F, the SG-VMSC-F, and the SG-SGSN-F are HPMN GTs, HLR-H 112 treats the SIMM subscribers as local subscribers of HPMN 102. Thus, SG 108 fakes the SIMM subscribers as local subscribers of HPMN 102 even when the SIMM subscribers are in FPMN 104. Various embodiments corresponding to the registration message are described in conjunction with FIG. 5 to FIG. 9.

If the roaming subscribers have not subscribed to the SIMM service, SG 108 records the location addresses in the registration message. Using the location addresses, SG 108 may send a welcome SMS to these subscribers for informing them of availability of the SIMM service and requesting them to subscribe to the SIMM service.

Furthermore, HLR-F 124 is configured to set an address of VLR, an address of VMSC, and an address of SGSN, corresponding to each MSISDN belonging to the pre-defined range of FPMN MSISDNs to the SG GT.

Upon receiving a subscription deactivation message, SG 108 de-associates the MSISDN-H, and the MSISDN-F. However, SG 108 retains the mapping of the MSISDN-H with the MSISDN-F, if the MSISDN-F was allocated to the subscriber permanently based on subscription activation. The subscriber can send the subscription deactivation message from one of HPMN 102, FPMN 104, or a Visited Public Mobile Network (VPMN). The subscription deactivation message is one of, but not limited to, a Short Message Service (SMS) message, an Unstructured Supplementary Service Data (USSD) message, a customer care call, a Wireless Application Protocol (WAP) interaction, a web interaction and an Interactive Voice Response (IVR) message. The subscription activation message and the subscription deactivation message can be different. In an exemplary case, the subscriber may send an SMS for subscription activation and an USSD message for subscription deactivation.

Furthermore, SG 108 recreates the association of the MSISDN-H with the MSISDN-F, upon receiving a subscription reactivation message, if the MSISDN-F was allocated to the subscriber permanently before subscription deactivation from the subscriber. The subscriber can send the subscription reactivation message from one of HPMN 102, FPMN 104 or a VPMN. The subscription reactivation message is one of, but not limited to, a Short Message Service (SMS) message, an Unstructured Supplementary Service Data (USSD) message, a customer care call, a Wireless Application Protocol (WAP) interaction, a web interaction and an Interactive Voice Response (IVR) message.

There may be a situation when SG 108 fails. In that case, mobile terminated services are not available to the SIMM subscriber registered in FPMN 104. The mobile terminated services include, but are not limited to, call-related services, SMS-related services, and Multimedia Message Service (MMS) related services. In addition, if the SIMM subscriber is a pre-paid subscriber, mobile originated services are not available to the SIMM subscriber. The mobile originated services include, but are not limited to, call-related services, SMS-related services, and MMS-related services. Therefore, SIMM system provides a fail-over support to the SIMM subscribers registered in FPMN 104, when SG 108 fails.

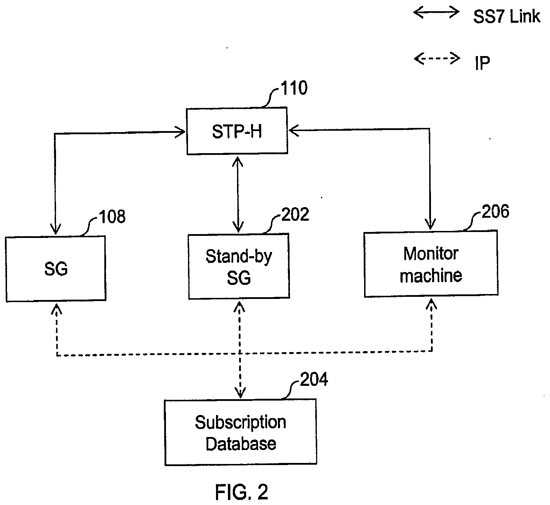

FIG. 2 illustrates a system block diagram for providing fail-over support to the subscriber registered in FPMN 104, in accordance with an embodiment of the present invention. System 100 further includes a stand-by SG 202, a subscription database 204 and a monitor machine 206 to provide fail-over support. Standby SG 202 replicates SG 108. Subscription database 204 maintains the association of the MSISDN-H with the MSISDN-F. SG 108 and standby SG 202 communicate with subscription database 204 using a packet switched connection, such as an Internet Protocol (IP) connection. Monitor machine 206 accesses subscription database 204 using a packet switched connection, such as an IP connection. Monitor machine 206 communicates with STP-H 110 over an SS7 link.

SG 108 and standby SG 202 have identical Signal Point Code (SPC). Therefore, when SG 108 fails, the signaling messages reach standby SG 202 over an SS7 link. Standby SG 202 functions in the same way as SG 108. Furthermore, when both SG 108 and standby SG 202 fail, system 100 is unable to provide the SIMM service to the SIMM subscriber. However, to provide normal service to the SIMM subscriber, monitor machine 206 sends a failure message to the SIMM subscriber, requesting the SIMM subscriber to power off and on a handset of the subscriber. Thereafter, monitor machine 206 issues a cancel location message to VLR-F 130. As a result, VLR-F 130 issues the registration message to HLR-H 112. Monitor machine 206 informs STP-H 110 to route the registration message, directly to HLR-H 112. Hence, the mobile-originated services and the mobile terminated services are available again to the subscriber. However, HLR-H 112 treats the subscriber as a roaming subscriber of HPMN 102, because system 100 cannot fake the SIMM as a local subscriber of HPMN 102.

In an embodiment of the present invention, SG 108 and stand-by SG 202 each are implemented using two Sun Fire 240, each with a Data Kinetics card, 4 Giga Byte (GB) Random Access Memory (RAM), two 36 GB hard disks, and a dual Ethernet card. Subscription database 204 is implemented using a Sun Fire 440, 8 GB RAM, and two 72 GB hard disks.

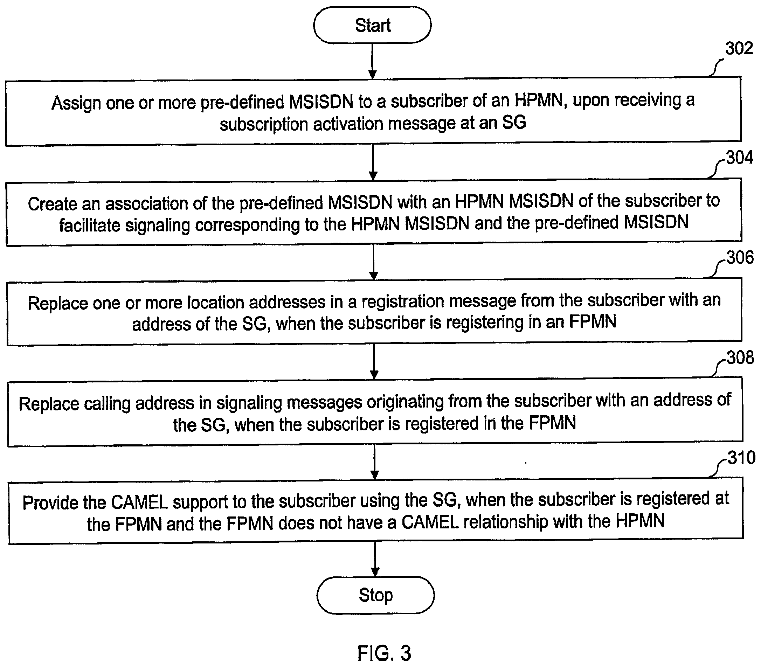

FIG. 3 is a flow chart for facilitating signaling, corresponding to multiple Mobile Station International Subscriber Directory Numbers (MSISDNs), associated with a subscriber of HPMN 102 with a corresponding IMSI-H, in accordance with an embodiment of the present invention. At step 302, an SG assigns one or more MSISDNs to the subscriber with an MSISDN-H, upon receiving a subscription activation message from the subscriber at the SG for subscribing for the SIMM service. The MSISDNs correspond to one or more FPMNs. In an embodiment of the present invention, SG 108 assigns the MSISDN-F to the subscriber. Thereafter, at step 304, the SG creates an association of the MSISDNs with the HPMN MSISDN, to facilitate signaling corresponding to the HPMN MSISDN and the MSISDNs associated with the subscriber. In an embodiment of the present invention, SG 108 creates the association of the MSISDN-F with the MSISDN-H. Furthermore, at step 306, the SG replaces one or more location addresses in a registration message from the subscriber, with an address of the SG, when the subscriber is registering in an FPMN. In an embodiment of the present invention, SG 108 replaces the one or more location addresses in the registration message from the subscriber with an address of SG 108, when the subscriber is registering in FPMN 104.

Thereafter, at step 308, the SG replaces a calling address in signaling messages originating from the subscriber, with an address of the SG, when the subscriber is registered in an FPMN. In an embodiment of the present invention, SG 108 replaces the calling address in the signaling messages, with an address of SG 108, when the subscriber is registered in FPMN 104. Finally, at step 310, the SG provides CAMEL support to the subscriber registered at the FPMN, when the FPMN does not have a CAMEL relationship with the HPMN. In an embodiment of the present invention, SG 108 provides the CAMEL support to the subscriber registered in FPMN 104, when FPMN 104 does not have the CAMEL relationship with HPMN 102.

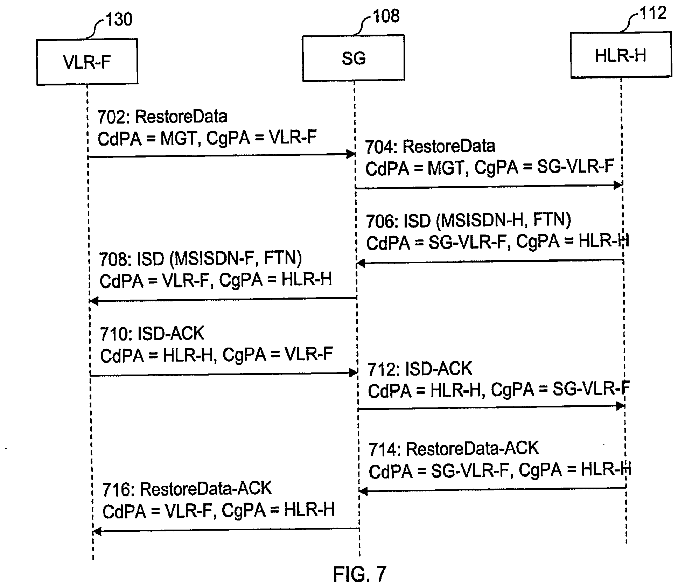

FIG. 4 is a signal flow diagram representing an SMS as a subscription activation message from the subscriber registered in FPMN 104, for activating the SIMM service, in accordance with an embodiment of the present invention. HPMN 102 assigns a Short Message Entity (SME) number to SG 108. The subscriber sends a subscription activation SMS to the SME number, to activate the subscription for SIMM service. The subscriber can send the subscription activation SMS from FPMN 104, if the subscriber is a roaming subscriber of HPMN 102 in FPMN 104. The subscription activation SMS reaches SMSC-H 116. At step 402, SMSC-H 116 sends the subscription activation SMS to SG 108. Thereafter, SG 108 issues a routing query for the MSISDN-H to HLR-H 112 using a message, such as Send Routing Information for Short Message, SRI-SM (MSISDN-H), to find the IMSI-H associated with the subscriber. In addition, SG 108 assigns the MSISDN-F to the subscriber, and creates an association of the MSISDN-F with the MSISDN-H. In an embodiment of the present invention, SG 108 maintains the association in subscription database 204. Thereafter, at step 404, SG 108 acknowledges the subscriber and sends the SMS to VMSC-F 132, using a message, such as Forward SMS [FwdSMS]. VMSC-F 132 represents a current location of the subscriber in FPMN 104. SG 108 prompts the subscriber through the SMS content to reset the power of a handset of the subscriber. At step 406, VMSC-F 132 acknowledges the receipt of the SMS by sending an FwdSMS-ACK message to SG 108. Thereafter, at step 408, SG 108 issues a cancel registration message, such as CancelLoc, to VLR-F 130 to force a registration message from VLR-F 130, to allow SG 108 to introduce the MSISDN-F of the subscriber. In an embodiment of the present invention, SG 108 issues the cancel registration message to the SGSN-F. When the subscriber resets the power of the handset, VLR-F 130, at step 410, issues a registration message, such as an LUP message, to SG 108. Detailed description of various embodiments, representing signal flow corresponding to an LUP message, is given in conjunction with FIG. 5 to FIG. 6. In an embodiment of the present invention, if the subscriber receives a mobile terminated call before the subscriber resets the power of the handset, VLR-F 130, at step 410, issues a data restore message to SG 108, using a message, such as RestoreData message. Detailed description of various embodiments, representing signal flow corresponding to a RestoreData message, is given in conjunction with FIG. 7 to FIG. 8.

In an embodiment of the present invention, when the subscriber sends the subscription activation SMS to SG 108 either from a VPMN or from HPMN 102, SG 108 issues a routing query for the MSISDN-H to HLR-H 112 using a message, such as SRI-SM (MSISDN-H), to find the IMSI-H associated with the subscriber. In addition, SG 108 assigns the MSISDN-F to the subscriber and creates an association of the MSISDN-F with the MSISDN-H. Furthermore, SG 108 maintains the association of the MSISDN-H with the MSISDN-F, in subscription database 204.

In an embodiment of the present invention, subscriber may send a subscription de-activation SMS to the SME number to de-activate the subscription, at step 402. Thereafter, SMSC-H 116 relays the subscription de-activation SMS to SG 108. Thereafter, SG 108 de-associates the MSISDN-F, and the MSISDN-H. However, SG 108 retains a mapping between the MSISDN-F, and the MSISDN-H, if the MSISDN-F was permanently allocated to the subscriber based on subscription activation.

FIG. 5 is a signal flow diagram for a registration message from a post-paid subscriber registering in FPMN 104, in accordance with an embodiment of the present invention. At step 502, VLR-F 130 sends a registration message, such as an LUP message, to SG 108. The registration message includes an address of VLR-F 130 and an address of VMSC-F 132. The registration message has a CdPA as a Mobile Global Title (MGT) corresponding to the IMSI-H associated with the post-paid subscriber, and a CgPA as the address of VLR-F 130. Thereafter, at step 504, SG 108 sends the registration message to HLR-H 112, using a message, such as a LUP message, after replacing the address of VLR-F 130, and the address of VMSC-F 132 with the SG-VLR-F and the SG-VMSC-F, respectively. In addition, SG 108 replaces the CgPA to the SG-VLR-F. SG 108 replaces the CgPA to fake to HLR-112, that the subscriber is local subscriber of HPMN 102, and not a roaming subscriber in FPMN 104. Thereafter, at step 506, HLR-H 112 sends subscriber information to SG 108, using a message, such as an Insert Subscriber Data (ISD) message. The subscriber information includes the MSISDN-H, and a Forward-To-Number (FTN) corresponding to the post-paid subscriber. The message has a CdPA as the SG-VLR-F, and a CgPA as an address of HLR-H 112. Thereafter, at step 508, SG 108 sends the subscriber information to VLR-F 130, using a message such as, an ISD message, after replacing the MSISDN-H in the subscriber information with the MSISDN-F. In addition, SG 108 replaces the CdPA to the address of VLR-F 130. Thereafter, at step 510, VLR-F 130 responds to SG 108 using an ISD-ACK message with a CdPA as the address of HLR-H 112, and a CgPA as the address of VLR-F 130. Thereafter, at step 512, SG 108 relays the ISD-ACK message to HLR-H 112, after replacing the CgPA with the SG-VLR-F. Thereafter, at step 514, HLR-H 112 sends a LUP-ACK message to SG 108 as a response to the registration message received at step 504. The LUP-ACK message has a CdPA as the SG-VLR-F, and a CgPA as the address of HLR-H 112. Finally, at step 516, SG 108 relays the LUP-ACK message to VLR-F 130, after replacing the CdPA with the address of VLR-F 130.

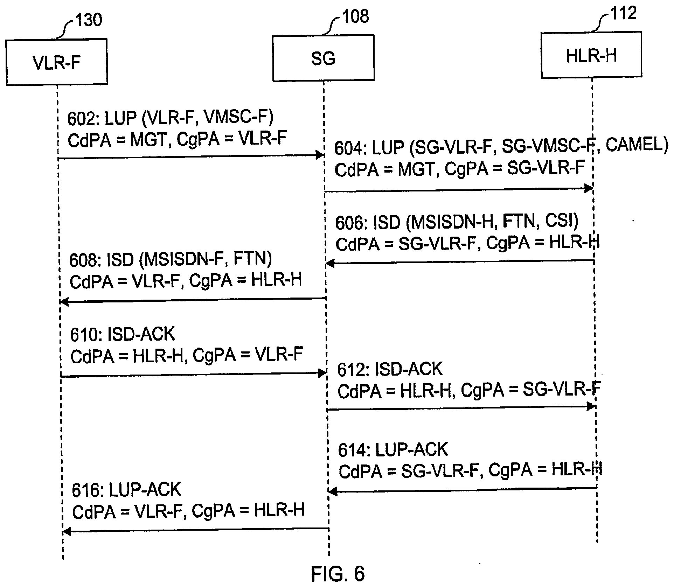

FIG. 6 is a signal flow diagram for a registration message from a pre-paid subscriber registering in FPMN 104, in accordance with an embodiment of the present invention. At step 602, VLR-F 130 sends a registration message, such as an LUP message, to SG 108. The registration message includes an address of VLR-F 130, and an address of VMSC-F 132. The registration message has a CdPA as an MGT corresponding to the IMSI-H associated with the pre-paid subscriber, and a CgPA as the address of VLR-F 130. Thereafter, at step 604, SG 108 sends the LUP message to HLR-H 112, after replacing the address of VLR-F 130, and the address of VMSC-F 132 with the SG-VLR-F, and the SG-VMSC-F, respectively. In addition, SG 108 replaces the CgPA to the SG-VLR-F. SG 108 replaces the CgPA in order to fake to HLR-112, that the subscriber is local subscriber of HPMN 102, and not a roaming subscriber in FPMN 104. Furthermore, in an embodiment of the present invention, when FPMN 104 does not have a CAMEL relationship with HPMN 102, SG 108 fakes to HLR-H 112 in the registration message, about availability of CAMEL support to the pre-paid subscriber to receive a CAMEL Subscription Information (CSI) profile corresponding to the pre-paid subscriber. Thereafter, at step 606, HLR-H 112 sends subscriber information to SG 108 using a message, such as an ISD message. The subscriber information includes the MSISDN-H, a Forward-To-Number (FTN) corresponding to the pre-paid subscriber, and the CSI profile. The message has a CdPA as the SG-VLR-F and a CgPA as an address of HLR-H 112. Thereafter, at step 608, SG 108 sends the received subscriber information to VLR-F 130 in the ISD message, after replacing the MSISDN-H in the subscriber information, with the MSISDN-F. In addition, SG 108 replaces the CdPA to the address of VLR-F 130. Thereafter, at step 610, VLR-F 130 responds to SG 108 using an ISD-ACK message with a CdPA as the address of HLR-H 112, and a CgPA as the address of VLR-F 130. Thereafter, at step 612, SG 108 relays the ISD-ACK message to HLR-H 112, after replacing the CgPA to the SG-VLR-F. Thereafter, at step 614, HLR-H 112 returns a LUP-ACK message to SG 108 as a response to the registration message received at step 604. The LUP-ACK message has a CdPA as the SG-VLR-F, and a CgPA as the address of HLR-H 112. Finally, at step 616, SG 108 relays the LUP-ACK message to VLR-F 130, after replacing the CdPA with the address of VLR-F 130.

SG 108 issues a cancel registration request to VLR-F 130 when there is a change in SIMM subscription of the subscriber, to force VLR-F 130 to issue a new registration message, to allow SG 108 to make the change effective. The change may be due to receipt of either the subscription activation message, or the subscription deactivation message. However, if the subscriber receives a mobile terminated call before the subscriber resets the power of the handset, VLR-F 130 issues a data restore message to SG 108, to allow SG 108 to make the change effective. FIG. 7 is a signal flow diagram for a data restore message from a post-paid subscriber registering in FPMN 104, in accordance with an embodiment of the present invention. At step 702, VLR-F 130 sends a data restore message, such as a RestoreData message, to SG 108. The data restore message has a CdPA as an MGT, corresponding to the IMSI-H associated with the subscriber, and a CgPA as an address of VLR-F 130. Thereafter, at step 704, SG 108 relays the RSD message to HLR-H 112 after replacing the CgPA to the SG-VLR-F. SG 108 replaces the CgPA in order to fake to HLR-112 that the subscriber is local subscriber of HPMN 102 and not a roaming subscriber in FPMN 104. Thereafter, at step 706, HLR-H 112 sends subscriber information to SG 108 using a message, such as an ISD message. The subscriber information includes the MSISDN-H, and a Forward-To-Number (FTN) corresponding to the subscriber. The message has a CdPA as the SG-VLR-F, and a CgPA as an address of HLR-H 112. Thereafter, at step 708, SG 108 sends the subscriber information to VLR-F 130 using the ISD message, after replacing the MSISDN-H in the subscriber information with the MSISDN-F. In addition, SG 108 replaces the CdPA to the address of VLR-F 130. Thereafter, at step 710, VLR-F 130 responds to SG 108 using an ISD-ACK message with a CdPA as the address of HLR-H 112, and a CgPA as the address of VLR-F 130. Thereafter, at step 712, SG 108 relays the ISD-ACK message to HLR-H 112, after replacing the CgPA to the SG-VLR-F. Thereafter, at step 714, HLR-H 112 sends a RestoreData-ACK message to SG 108 as a response to the data restore message received at step 704. The Restore-ACK message has a CdPA as the SG-VLR-F, and a CgPA as the address of HLR-H 112. Finally, at step 716, SG 108 relays the RestoreData-ACK message to VLR-F 130, after replacing the CdPA with the address of VLR-F 130.

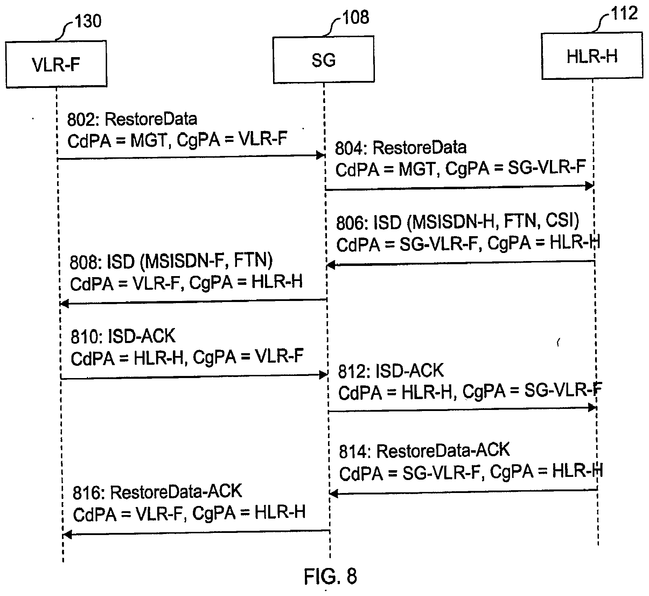

FIG. 8 is a signal flow diagram for a data restore message from a pre-paid subscriber registering in FPMN 104, in accordance with an embodiment of the present invention. At step 802, VLR-F 130 sends a data restore message, such as a RestoreData message, to SG 108. The data restore message has a CdPA as an MGT, corresponding to the IMSI-H associated with the pre-paid subscriber, and a CgPA as an address of VLR-F 130. Thereafter, at step 804, SG 108 relays the RestoreData message to HLR-H 112 after, replacing the CgPA to the SG-VLR-F. SG 108 replaces the CgPA in order to fake to HLR-112, that the subscriber is local subscriber of HPMN 102, and not a roaming subscriber in FPMN 104. Furthermore, in an embodiment of the present invention, when FPMN 104 does not have a CAMEL relationship with HPMN 102, SG 108 indicates to HLR-H 112 in the registration message about availability of CAMEL support to the pre-paid subscriber. Thereafter, at step 806, HLR-H 112 sends subscriber information to SG 108 using a message, such as an ISD message. The subscriber information includes the MSISDN-H, a Forward-To-Number (FTN), and a CSI profile of the pre-paid subscriber. The message has a CdPA as the SG-VLR-F and a CgPA as an address of HLR-H 112. Thereafter, at step 808, SG 108 sends the subscriber information to VLR-F 130 through the ISD message, after replacing the MSISDN-H in the subscriber information with the MSISDN-F. In addition, SG 108 replaces the CdPA to the address of VLR-F 130. Thereafter, at step 810, VLR-F 130 returns to SG 108, an ISD-ACK message with a CdPA as the address of HLR-H 112, and a CgPA as the address of VLR-F 130. Thereafter, at step 812, SG 108 relays the ISD-ACK message to HLR-H 112 after replacing the CgPA to the SG-VLR-F. Thereafter, at step 814, HLR-H 112 sends a RestoreData-ACK message to SG 108 as a response to the data restore message received at step 804. The Restore-ACK message has a CdPA as the SG-VLR-F and a CgPA as the address of HLR-H 112. Finally, at step 816, SG 108 relays the RestoreData-ACK message to VLR-F 130, after replacing the CdPA with the address of VLR-F 130.

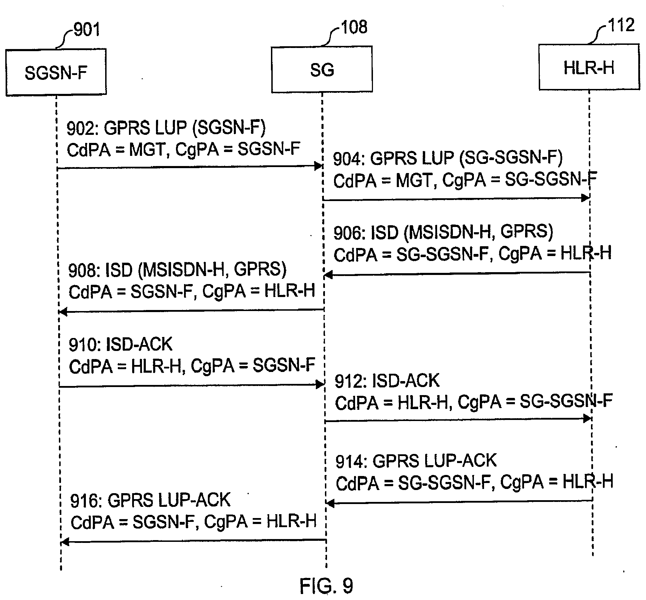

It will be apparent to a person skilled in the art, that subscriber can also use GPRS service when subscribed for SIMM service. FIG. 9 is a signal flow diagram for a GPRS registration message from the subscriber registering in FPMN 104, in accordance with an embodiment of the present invention. Since this embodiment deals with GPRS, we include an SGSN-F 901 for exemplary explanation purposes. At step 902, SGSN-F 901 sends a GPRS registration message, such as a GPRS LUP message, to SG 108. The GPRS registration message includes an address of SGSN-F 901. The GPRS registration message has a CdPA as an MGT, corresponding to the IMSI-H associated with the subscriber, and a CgPA as the address of SGSN-F 901. Thereafter, at step 904, SG 108 sends the GPRS LUP message to HLR-H 112, after replacing the address of SGSN-F 901 in the GPRS registration with the SG-SGSN-F. In addition, SG 108 replaces the CgPA to the SG-SGSN-F. SG 108 replaces the address of SGSN-F 901 and the CgPA, to prevent HLR-H 112 from treating the subscriber as a roaming subscriber of HPMN 102. Thereafter, at step 906, HLR-H 112 sends GPRS subscriber information to SG 108 using a message, such as an ISD message. The GPRS subscriber information includes the MSISDN-H of the subscriber. The message has a CdPA as the SG-SGSN-F and a CgPA as an address of HLR-H 112. Thereafter, at step 908, SG 108 sends the received GPRS subscriber information to SGSN-F 901, by relaying the ISD message, after replacing the CdPA to the address of SGSN-F 901. Thereafter, at step 910, SGSN-F 901 responds to SG 108 using an ISD-ACK message with a CdPA as the address of HLR-H 112 and a CgPA as the address of SGSN-F 901. Thereafter, at step 912, SG 108 relays the ISD-ACK message to HLR-H 112, after replacing the CgPA to the SG-SGSN-F. Thereafter, at step 914, HLR-H 112 returns a GPRS LUP-ACK message to SG 108 as a response to the GPRS registration message received at step 904. The GPRS LUP-ACK message has a CdPA as the SG-SGSN-F, and a CgPA as the address of HLR-H 112. Finally, at step 916, SG 108 relays the GPRS LUP-ACK message to SGSN-F 901, after replacing the CdPA with the address of SGSN-F 901.

Usually, SIMM subscribers without a roaming profile are unable to register in a VPMN. System 100 may allow the SIMM subscribers to register in the VPMN, when the VPMN resides in the same country as FPMN 104. In an embodiment of the present invention, SG 108 rejects a pre-defined number of registration attempts by a SIMM subscriber. SG 108 accepts a registration from the SIMM subscriber after the pre-defined number of registration attempts. However, in this case, SG 108 does not fake to HLR-H 112 the SIMM subscriber as a local subscriber of HPMN 102, therefore, treating the SIMM subscriber as a normal roaming subscriber, and billing the SIMM subscriber according to roaming rates.

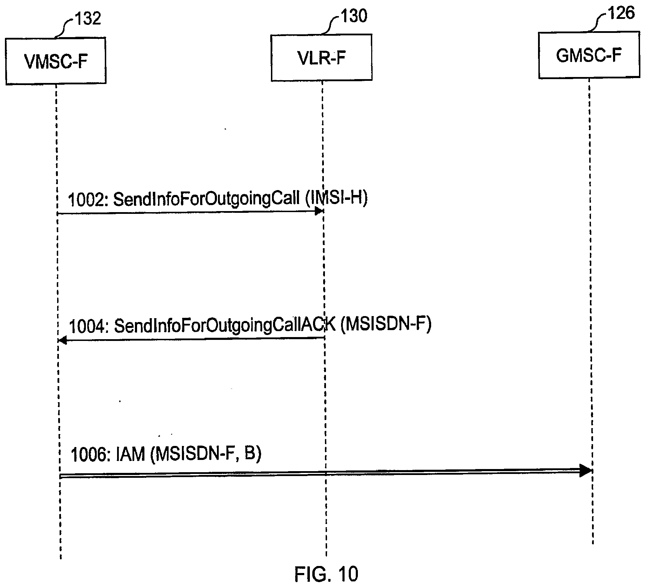

In various embodiments of the invention, the SIMM system (i.e. system 100) facilitates mobile originated, and terminated call-related services as well as non-call related services corresponding to the MSISDN-H and the MSISDN-F associated with the subscriber. FIGS. 10, 11 and 12 illustrate various embodiments corresponding to mobile originated call-related services. FIG. 10 is a signal flow diagram representing a mobile originated call from a post-paid subscriber A registered in FPMN 104, in accordance with an embodiment of the present invention. Subscriber A has subscribed to SIMM service. Subscriber A makes a call to subscriber B, when subscriber A is registered at FPMN 104. The call reaches VMSC-F 132. At step 1002, VMSC-F 132 requests subscriber information for the call from VLR-F 130 by sending a message, such as a SendInfoForOutgoingCall (IMSI-H), to VLR-F 130. Thereafter, at step 1004, VLR-F 130 sends the subscriber information to VMSC-F 132, in an acknowledgment to the received message. The subscriber information includes the MSISDN-F. Finally, at step 1006, VMSC-F 132 sends a call set-up request to GMSC-F 126 using a message, such as an Initial Address Message [IAM (MSISDN-F, B)].

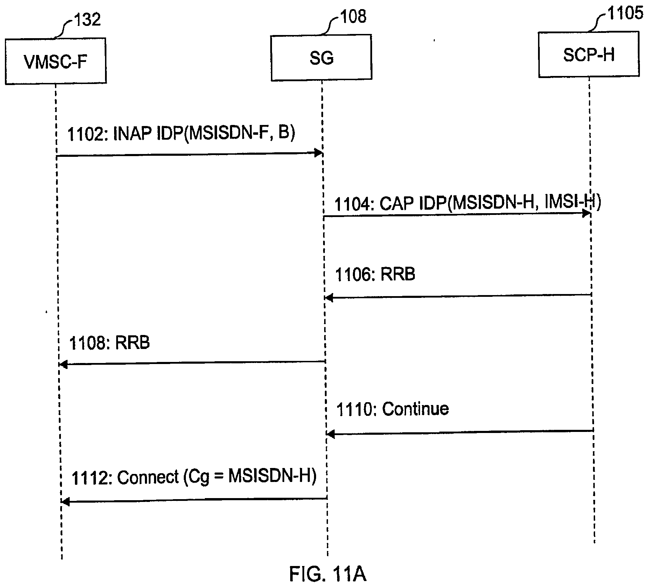

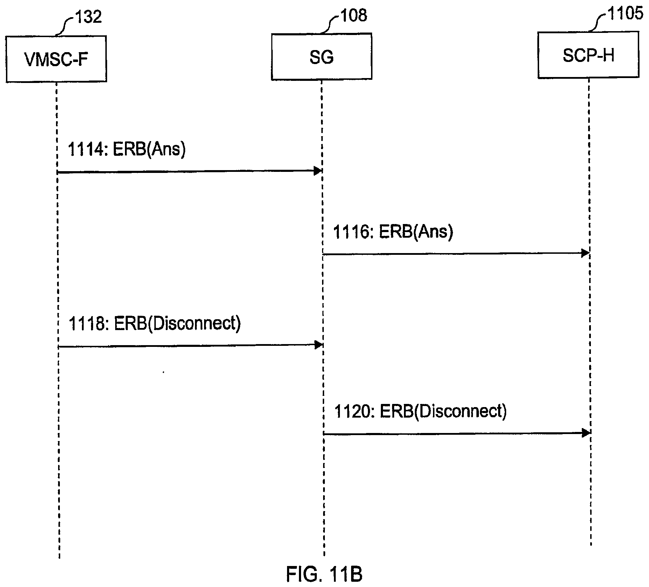

In an embodiment of the present invention, VMSC-F 132 uses an Intelligent Network Application Part (INAP) to route a mobile originated call from a pre-paid subscriber registered in FPMN 104. FIGS. 11A and 11B represent a signal flow diagram for a mobile originated call from a pre-paid subscriber A registered in FPMN 104, in accordance with an embodiment of the present invention. The pre-paid subscriber A makes a call to subscriber B. Subscriber A has subscribed to SIMM service. The call reaches VMSC-F 132. Since SG 108 provides the CAMEL support to the subscriber, VMSC-F 132, at step 1102, requests a call-completion instruction from SG 108 by sending a message, such as an INAP Initial Detection Point (IDP) with a calling number as the MSISDN-F. At step 1104, SG 108 relays the request of the call-completion instruction to an HPMN Signaling Control Point (SCP-H) 1105, by sending a message, such as a CAMEL Application Part (CAP) IDP message with the calling number as the MSISDN-H, and the IMSI-H. Thereafter, at step 1106, SCP-H 1105 requests SG 108 to monitor a call-related event and inform SCP-H 1105, by sending a message such as a CAP Request Report Basic call state model (RRB) for billing purpose. The call-related event includes, but is not limited to, an answer event, a disconnect event, a busy event, and a no-answer event. Thereafter, at step 1108, SG 108 relays the request to VMSC-F 132 for monitoring the call-related event, by sending a message, such as an INAP RRB message. Furthermore, at step 1110, SCP-H 1105 requests SG 108 to continue with the call, by sending a message, such as a CAP Continue message.

SG 108 can change the caller line identification (CLI) of the calling number A, depending on the called number B. If the called number B is a number of the country in which FPMN 104 resides, SG 108 retains the CLI of the calling number as the MSISDN-F. In this case, SG 108, at step 1112, requests VMSC-F 132 to continue with the call with the calling number A as the MSISDN-F, by sending a message, such as an INAP Continue message. When the called number B is a number of a country other than the country in which FPMN 104 resides, SG 108 changes the calling number to the MSISDN-H. In this case, at step 1112, SG 108 requests VMSC-F 132 to connect the call by sending a message, such as an INAP Connect message with the calling number as the MSISDN-H. Alternatively, subscriber A may specifically indicate SG 108 for a change in the CLI of the calling number A by adding a special prefix to the called number B. In an exemplary case, subscriber A adds "#" to the called number B. When subscriber A dials a prefixed called number (#-B), SG 108 retains the calling number as the MSISDN-F, if the called number B is a number of a country other than the country in which FPMN 104 resides. Otherwise, SG 108 replaces the calling number to the MSISDN-H.

Thereafter, VMSC-F 132 monitors the call-related events. Upon detecting establishment of the call, at step 1114, VMSC-F 132 informs SG 108 of an answer event, by sending a message such as an INAP Event Report Basic call state model message [ERB (Ans)]. Thereafter, at step 1116, SG 108 informs SCP-H 1105 of the answer event, by relaying the ERB (Ans) message to SCP-H 1105. Thereafter, SCP-H 1105 starts accounting and a timer for pre-paid limit corresponding to subscriber A. Upon detecting disconnection of the call, at step 1118, VMSC-F 132 informs SG 108 of the disconnect event, by sending a message such as an INAP ERB (Disconnect). Finally, at step 1120, SG 108 informs SCP-H 1105 of the disconnect event, by relaying the ERB (Disconnect) message to SCP-H 1105. Thereafter, SCP-H 1105 stops the accounting and the timer corresponding to the subscriber.

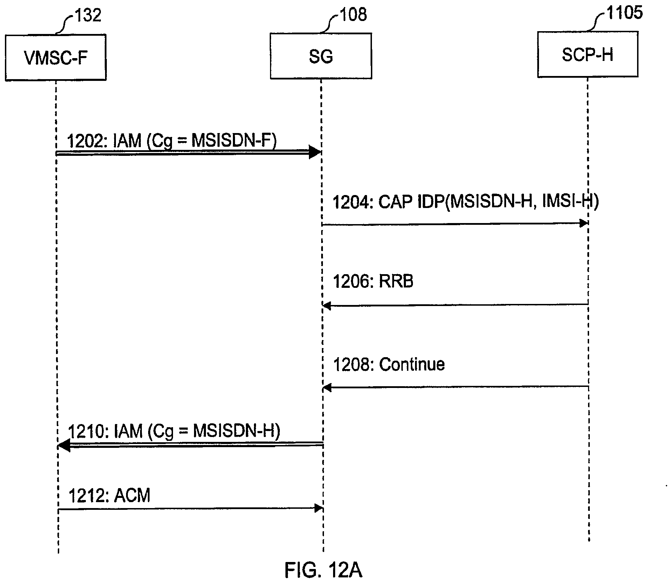

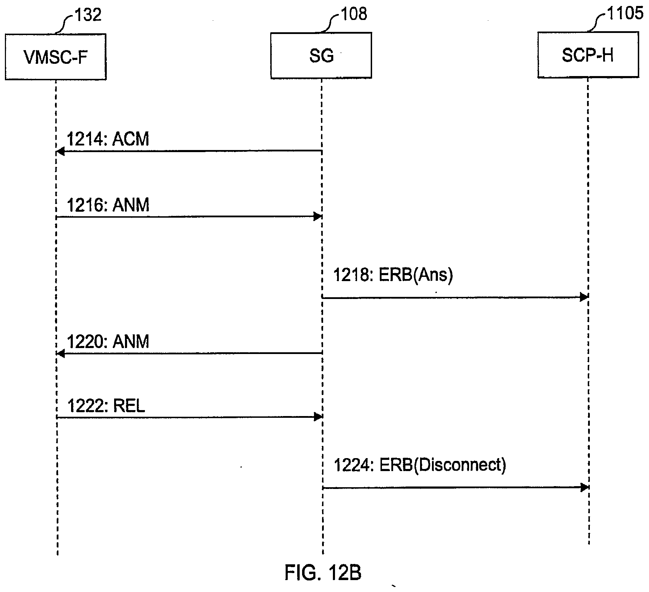

In another embodiment of the present invention, VMSC-F 132 uses an Integrated Service digital network User Part (ISUP) to route a mobile originated call from a pre-paid subscriber registered in FPMN 104. FIGS. 12A and 12B represent a signal flow diagram for a mobile originated call from the pre-paid subscriber A registered in FPMN 104, in accordance with another embodiment of the present invention. Subscriber A makes a call to subscriber B. The call reaches VMSC-F 132. Since SG 108 provides the CAMEL support to the pre-paid subscriber, VMSC-F 132, at step 1202, sends a call connection requests to SG 108 using a message, such as an ISUP IAM with a calling number as the MSISDN-F, [IAM (Cg = MSISDN-F)]. At step 1204, SG 108 requests a call-completion instruction from SCP-H 1105, by sending a message, such as a CAP IDP message with the calling number as the MSISDN-H, and the IMSI-H. Thereafter, at step 1206, SCP-H 1105 requests SG 108 to monitor a call-related event, by sending a message such as a CAP RRB message for billing purpose. The call-related event includes, but is not limited to, an answer event, a disconnect event, a busy event, and a no-answer event. Thereafter, at step 1208, SCP-H 1105 requests SG 108 to continue with the call, by sending a message, such as a CAP Continue message. Thereafter, at step 1210, SG 108 requests VMSC-F 132 to connect the call with the calling number as the MSISDN-H, by sending a message, such as an ISUP IAM message, [IAM (Cg = MSISDN-H)] based on the called number B, as described in conjunction with FIG. 11. When SG 108 does not change the calling number, at step 1210, SG 108 requests VMSC-F 132 to continue with the call with the calling number as the MSISDN-F, by sending an ISUP IAM message, [IAM (Cg = MSISDN-F)].

Thereafter, at step 1212, VMSC-F 132 informs SG 108 of completion of the connection as a response for the ISUP IAM message received at step 1210, by sending a message, such as an ISUP Address Completion Message (ACM). Thereafter, at step 1214, SG 108 relays the ISUP ACM message back to VMSC-F 132. Upon detecting establishment of the call, at step 1216, VMSC-F 132 informs SG 108 of the answer event, by sending a message, such as an ISUP Answer Message (ANM). Thereafter, at step 1218, SG 108 informs SCP-H 1105 of the answer event, by sending a message such as a CAP ERB (Ans) message. Thereafter, SCP-H 1105 starts accounting, and a timer for pre-paid limit of subscriber A. Thereafter, at step 1220, SG 108 relays the ISUP ANM message back to VMSC-F 132. Furthermore, upon detecting disconnection of the call, at step 1222, VMSC-F 132 informs SG 108 of the disconnect event, by sending a message such as an ISUP Release (REL) message. Finally, at step 1224, SG 108 informs SCP-H 1105 of the disconnect event, by sending a message, such as a CAP ERB (Disconnect) message to SCP-H 1105. Thereafter, SCP-H 1105 stops the accounting and the timer corresponding to the subscriber. This helps in maintaining the billing for the SIMM subscriber.

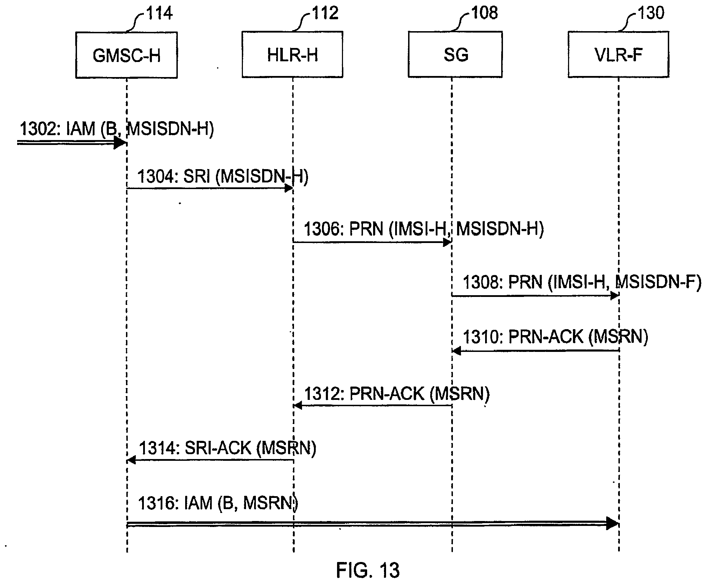

As explained earlier, the SIMM system also facilitates mobile terminated call-related services for its subscribers. FIGS. 13 to 18 illustrate various embodiments corresponding to mobile terminated call-related services. FIG. 13 is a signal flow diagram representing a mobile terminated call to the MSISDN-H of a post-paid subscriber A registered in FPMN 104, in accordance with an embodiment of the present invention. The post-paid subscriber A has subscribed to the SIMM service. Subscriber B calls subscriber A at his MSISDN-H. At step 1302, GMSC-H 114 receives a call connection request in the form of a message, such as an ISUP IAM message, [IAM (B, MSISDN-H)]. Thereafter, at step 1304, GMSC-H 114 issues a routing query for the MSISDN-H to HLR-H 112, using a Send Routing Information query, [SRI (MSISDN-H)]. At step 1306, HLR-H 112 issues a Provide Roaming Number (PRN) query for the MSISDN-H, PRN (IMSI-H, MSISDN-H), to SG 108. Thereafter, at step 1308, SG 108 issues a PRN query for the MSISDN-F, PRN (IMSI-H, MSISDN-F), to VLR-F 130. VLR-F 130 represents a current location of the subscriber in FPMN 104. At step 1310, VLR-F 130 returns the roaming number, i.e. a Mobile Station Roaming Number (MSRN), to SG 108 in a Provide Roaming Number query Acknowledgement, [PRN-ACK (MSRN)]. Thereafter, at step 1312, SG 108 relays the MSRN to HLR-H 112, using a message, such as a PRN Acknowledgment, [PRN-ACK (MSRN)]. Thereafter, HLR-H 112 returns the MSRN to GMSC-H 114, using a Send Routing Information Acknowledgment, SRI-ACK (MSRN), as a response to the routing query received at step 1304. Finally, at step 1316, GMSC-H 114 routes the call to VLR-F 130, by sending an ISUP IAM message, [IAM (B, MSRN)].

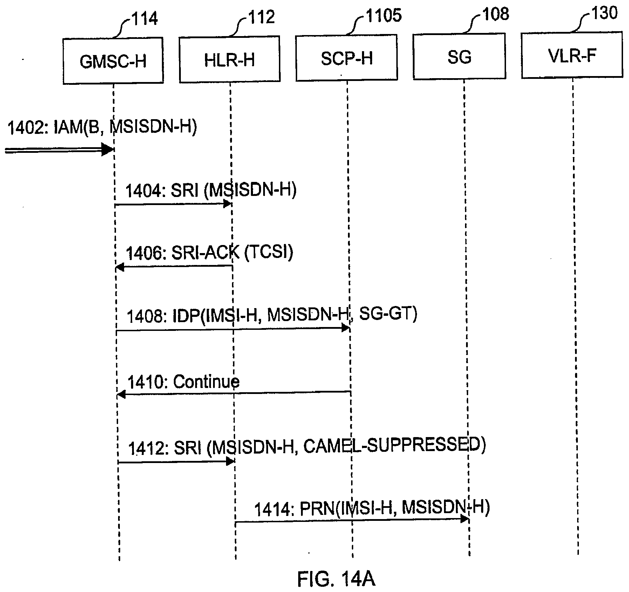

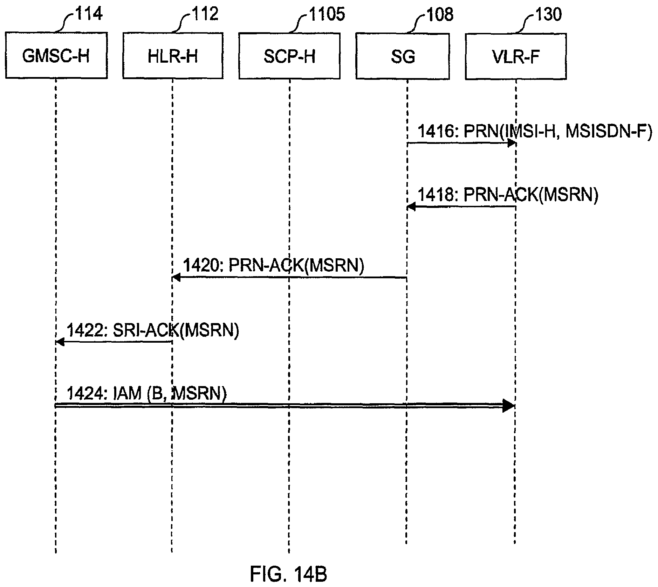

FIGS. 14A and 14B represent a signal flow diagram for a mobile terminated call to the MSISDN-H of a pre-paid subscriber A registered in FPMN 104, in accordance with an embodiment of the present invention. The pre-paid subscriber A has subscribed to the SIMM service. Subscriber B calls subscriber A at his MSISDN-H. At step 1402, GMSC-H 114 receives a call connection request in the form of a message, such as an ISUP IAM message, [IAM (B, MSISDN-H)]. Thereafter, at step 1404, GMSC-H 114 issues a routing query for the MSISDN-H to HLR-H 112, using an SRI query, [SRI (MSISDN-H)]. HLR-H 112 retrieves a Terminating CSI profile (T-CSI) for subscriber A. Thereafter, at step 1406, HLR-H 112 returns the T-CSI to GMSC-H 114 in an SRI-ACK (T-CSI) message, as a response to the routing query received at step 1404. Thereafter, at step 1408, GMSC-H 114 requests call-completion instruction from SCP-H 1105 for the call to the MSISDN-H, by sending a message, such as a CAP IDP message, [IDP (IMSI-H, MSISDN-H, SG-GT)]. Since the SG-GT received in the call-completion instruction message is an HPMN GT, SCP-H 1105 treats the subscriber as a local subscriber of HPMN 102 and charges the subscriber at a local rate. At step 1410, SCP-H 1105 requests GMSC-H 114 to continue with the call, by sending a message, such as a CAP Continue message.

Thereafter, at step 1412, GMSC-H 114 issues a routing query for the MSISDN-H to HLR-H 112 with a suppressed T-CSI profile of the subscriber, using an SRI query, [SRI (MSISDN-H, CAMEL suppressed)]. Thereafter, at step 1414, HLR-H 112 issues a PRN query for the MSISDN-H, PRN (IMSI-H, MSISDN-H), to SG 108. Thereafter, at step 1416, SG 108 relays the PRN query, PRN (IMSI-H, MSISDN-F), to VLR-F 130. VLR-F 130 represents a current location of the subscriber in FPMN 104. At step 1418, VLR-F 130 returns the roaming number, i.e. an MSRN, to SG 108 in a PRN-ACK message, [PRN-ACK (MSRN)]. Thereafter, at step 1420, SG 108 sends the MSRN to HLR-H 112, using a message, such as a PRN Acknowledgment, [PRN-ACK (MSRN)]. Thereafter, at step 1422, HLR-H 112 returns the MSRN to GMSC-H 114, using a Send Routing Information Acknowledgment, SRI-ACK (MSRN), as a response to the routing query received at step 1412. Finally, at step 1424, GMSC-H 114 routes the call to VLR-F 130, by sending an ISUP IAM message, [IAM (B, MSRN)].

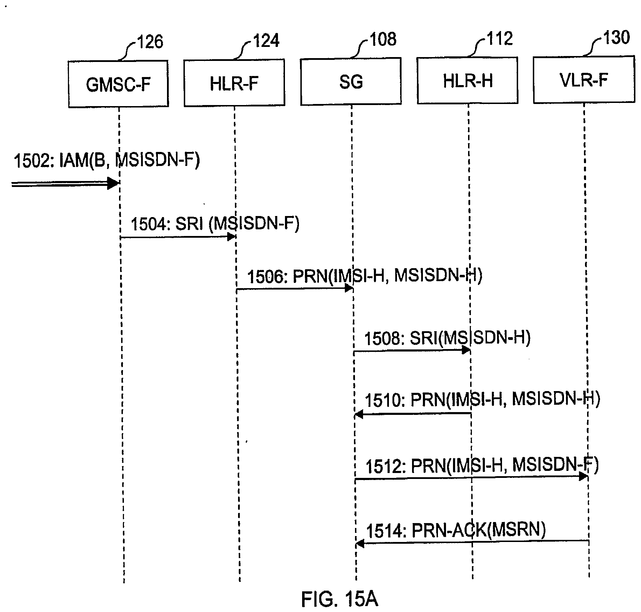

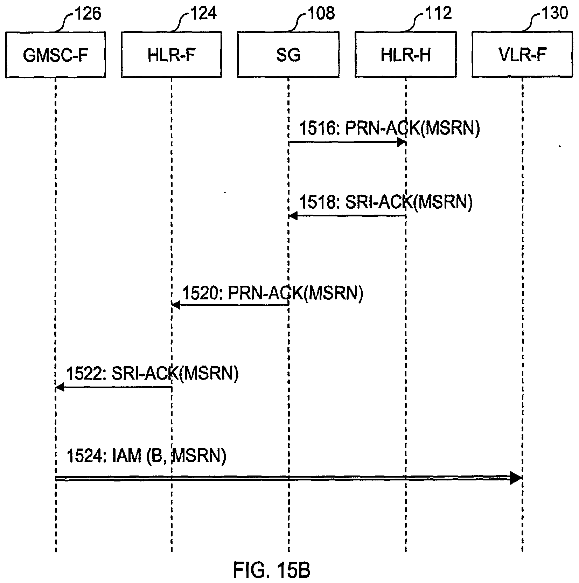

Since the subscriber has subscribed to SIMM service, he can also receive the call on his FPMN MSISDN. FIGS. 15A and 15B represent a signal flow diagram for a mobile terminated call to the MSISDN-F of the post-paid subscriber A registered in FPMN 104, in accordance with an embodiment of the present invention. At step 1502, GMSC-F 126 receives a call connection request, from subscriber B to the MSISDN-F of subscriber A, in the form of a message, such as an ISUP IAM message, [IAM (B, MSISDN-F)]. Thereafter, at step 1504, GMSC-F 126 issues a routing query for the MSISDN-F to HLR-F 124, by sending a message such as an SRI message, [SRI (MSISDN-F)]. At step 1506, HLR-F 124 issues a PRN query for the MSISDN-F, PRN (IMSI-H, MSISDN-F), to SG 108. Thereafter, at step 1508, SG 108 issues a routing query for the MSISDN-H to HLR-H 112, using an SRI query, [SRI (MSISDN-H)]. At step 1510, HLR-F 124 issues a routing query by sending a message such as, a PRN query for the MSISDN-H, PRN (IMSI-H, MSISDN-H), to SG 108.

Thereafter, at step 1512, SG 108 issues a PRN query for the MSISDN-F, PRN (IMSI-H, MSISDN-F), to VLR-F 130. VLR-F 130 represents a current location of subscriber A in FPMN 104. At step 1514, VLR-F 130 returns the roaming number, i.e. an MSRN, to SG 108 as a PRN-ACK (MSRN). Thereafter, at step 1516, SG 108 returns the MSRN to HLR-H 112, using a message, such as a PRN Acknowledgment, [PRN-ACK (MSRN)]. Thereafter, at step 1518, HLR-H 112 sends the MSRN to SG 108, in an SRI-ACK message, SRI-ACK (MSRN), as a response to the routing query received at step 1508. At step 1520, SG 108 returns the MSRN to HLR-F 124, using a message, such as a PRN-ACK (MSRN). Thereafter, at step 1522, HLR-F 124 sends the MSRN to GMSC-F 126, using SRI-ACK (MSRN), as a response to the routing query received at step 1504. Finally, at step 1524, GMSC-F 126 routes the call to VLR-F 130, by sending an ISUP IAM message, [IAM (B, MSRN)].

In an embodiment of the present invention, when SG 108 has the address of VLR-F 130, SG 108 can issue, at step 1508, a PRN query for the MSISDN-F, PRN (IMSI-H, MSISDN-F), to VLR-F 130. Then step 1514 and steps 1520 to 1524 complete the signal flow.

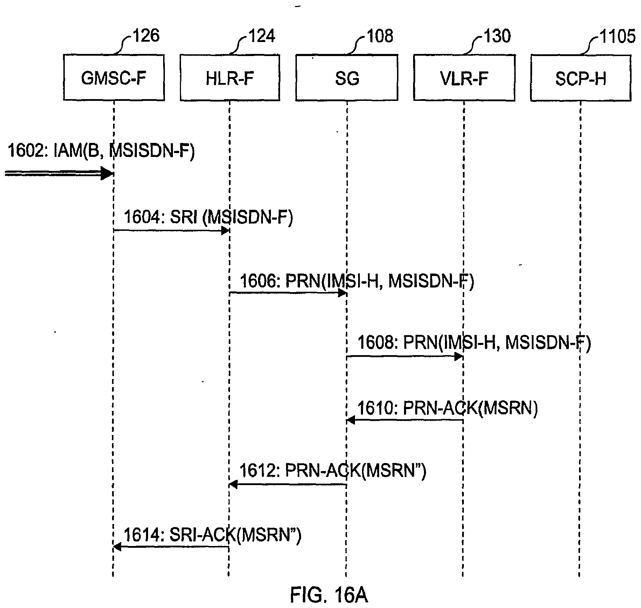

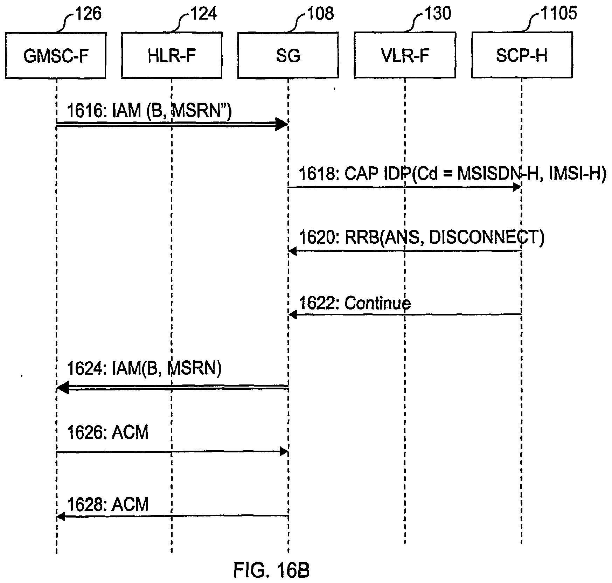

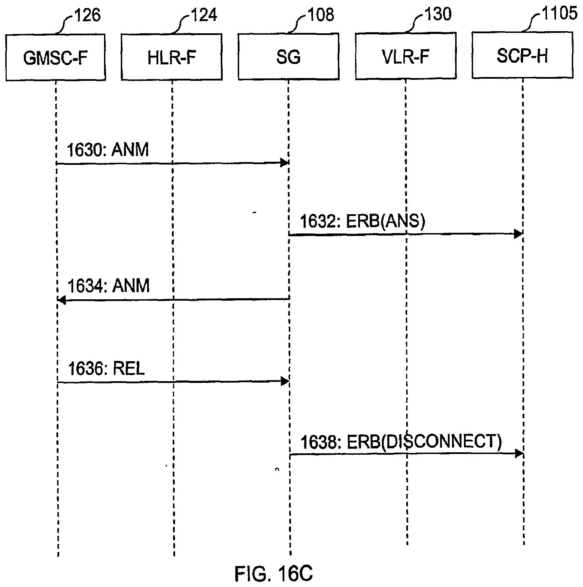

FIGS. 16A, 16B, and 16C represent a signal flow diagram for a mobile terminated call to the MSISDN-F of the pre-paid subscriber A registered in FPMN 104, in accordance with an embodiment of the present invention. At step 1602, GMSC-F 126 receives a call connection request, from subscriber B to the MSISDN-F of the subscriber A, in an ISUP IAM message, [IAM (B, MSISDN-F)]. Thereafter, at step 1604, GMSC-F 126 issues a routing query for the MSISDN-F to HLR-F 124, using an SRI query, [SRI (MSISDN-F)]. At step 1606, HLR-F 124 issues a PRN query for the MSISDN-F, PRN (IMSI-H, MSISDN-F), to SG 108. Thereafter, at step 1608, SG 108 issues a roaming number request, such as a PRN query for the MSISDN-F, PRN (IMSI-H, MSISDN-F), to VLR-F 130. VLR-F 130 represents a current location of the subscriber in FPMN 104. At step 1610, VLR-F 130 returns the roaming number, i.e. an MSRN, to SG 108 in a PRN-ACK, [PRN-ACK (MSRN)]. Thereafter, at step 1612, SG 108 sends an MSRN" to HLR-F 124 as a Provide Roaming Number query Acknowledgment, [PRN-ACK (MSRN") and maintains a mapping between the MSRN and the MSRN". The MSRN" belongs to a range of MSRN allocated by FPMN 104 to SG 108. SG sends the MSRN" to route the call through SG 108 for billing purpose. Thereafter, at step 1614, HLR-F 124 returns the MSRN" to GMSC-F 126, by sending SRI-ACK (MSRN"), as a response to the routing query received at step 1604.

In an embodiment of the present invention, GMSC-F issues an ISUP trigger to SG 108 on the MSRN". Thereafter, at step 1616, GMSC-F 126 sends a call connection request, from the number B to the MSRN", to SG 108 using a message, such as an ISUP IAM, [IAM (B, MSRN")]. At step 1618, SG 108 requests a call-completion instruction from SCP-H 1105, by sending a message, such as a CAP IDP message with the called number as the MSISDN-H, and the IMSI-H. Thereafter, at step 1620, SCP-H 1105 requests SG 108 to monitor a call-related event for billing purpose, by sending a CAP RRB message. The call-related event includes, but is not limited to, an answer event, a disconnect event, a busy event, and a no-answer event. Thereafter, at step 1622, SCP-H 1105 requests SG 108 to continue with the call, by sending a message, such as a CAP Continue message. Thereafter, at step 1624, SG 108 requests GMSC-F 126 to connect the call from the number B to the MSRN, by sending a message, such as an ISUP IAM message, [IAM (B, MSRN)]. Thereafter, at step 1626, GMSC-F 126 informs SG 108 of completion of the connection as a response for the ISUP IAM message received at step 1624, by sending a message, such as an ISUP ACM message. Further, at step 1628, SG 108 relays the ISUP ACM message back to GMSC-F 126.

Upon detecting establishment of the call, at step 1630, GMSC-F 126 informs SG 108 of the answer event, by sending an ISUP ANM message. Thereafter, at step 1632, SG 108 informs SCP-H 1105 of the answer event, by sending a message such as a CAP ERB (Ans) message. Thereafter, SCP-H 1105 starts accounting and a timer corresponding to subscriber B. Thereafter, at step 1634, SG 108 relays the ISUP ANM message back to GMSC-F 126. Furthermore, upon detecting disconnection of the call, at step 1636, GMSC-F 126 informs SG 108 of the disconnect event, by sending a message such as an ISUP REL message. Finally, at step 1638, SG 108 informs SCP-H 1105 of the disconnect event, by sending a message, such as an INAP ERB (Disconnect) message to SCP-H 1105. Thereafter, SCP-H 1105 stops the accounting and the timer corresponding to the subscriber.

FPMN 104 may implement IN protocol trigger on the MSRN" to SG 108, instead of ISUP trigger. In an embodiment of the present invention, when FPMN 104 supports IN protocol, at step 1616, GMSC-F 126 sends a call connection request, from the number B to the MSRN", to SG 108 using a message, such as an INAP IDP message, [IDP (B, MSRN")]. It would be apparent to a person skilled in the art, that GMSC-F 126 and SG 108 further exchange various other INAP messages such as, but not limited to, an INAP RRB message, an INAP Continue message, and an INAP ERB message, to complete the call.

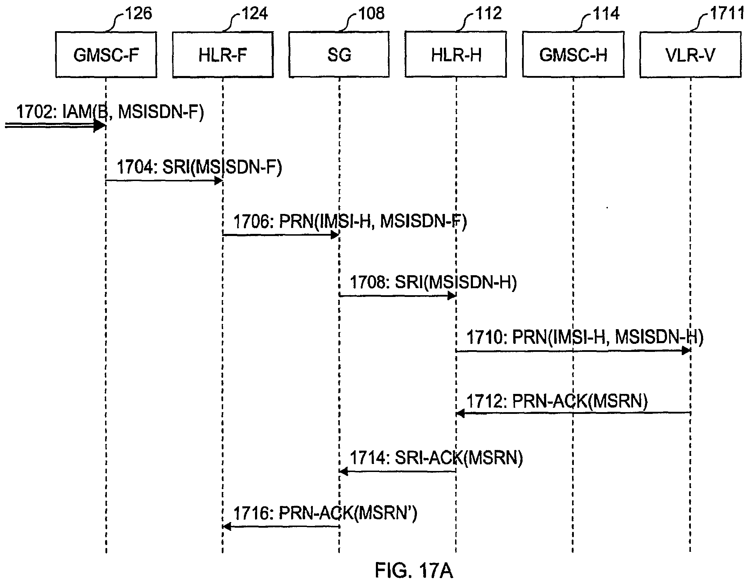

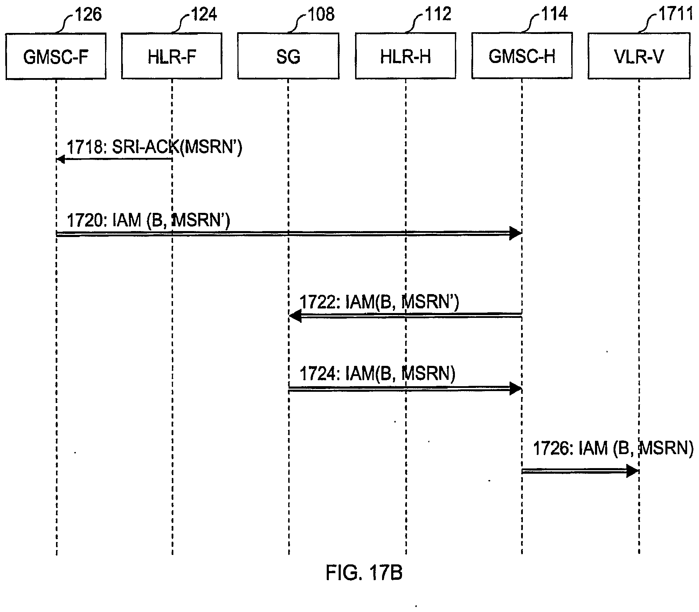

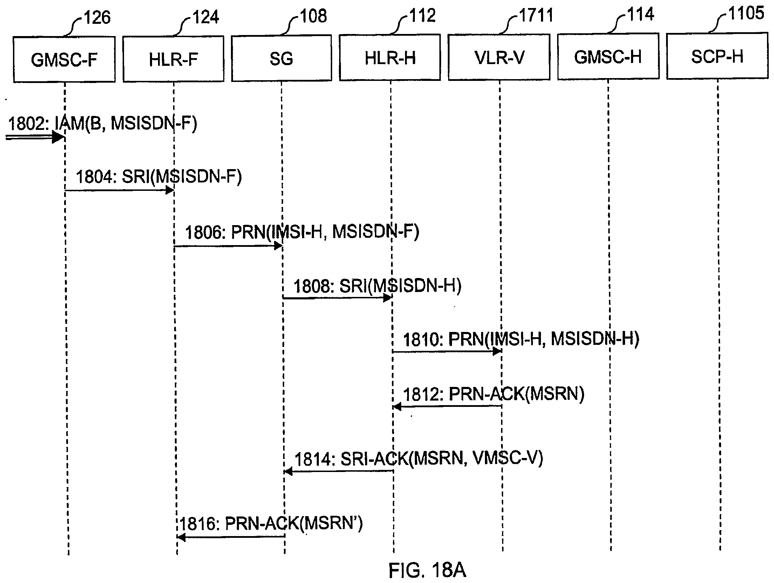

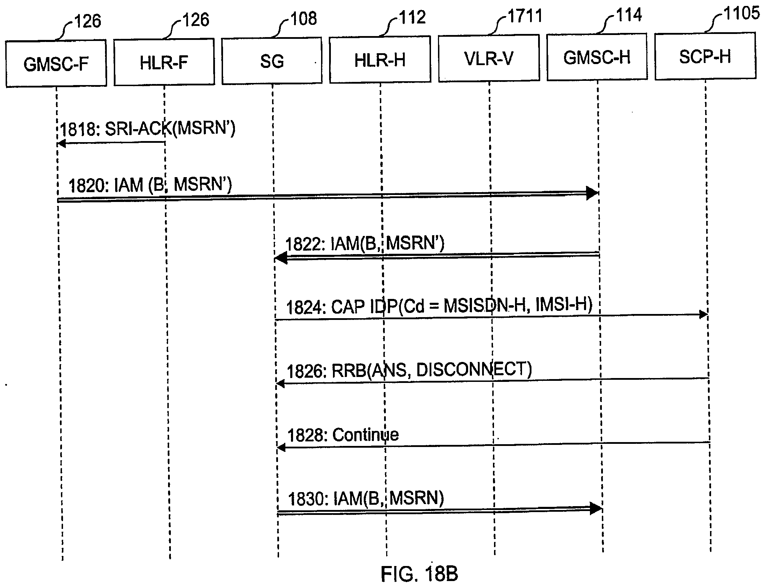

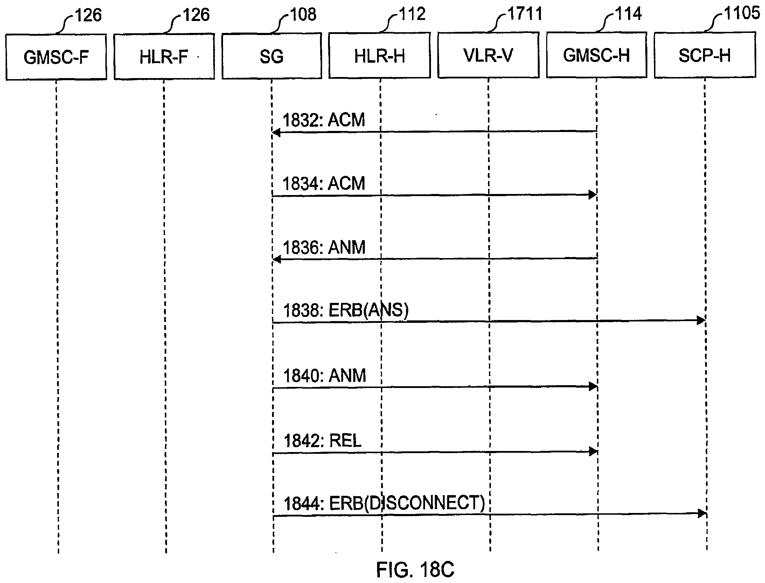

In addition, system 100 provides mobile terminated call-related services to the MSISDN-F of the subscriber registered in a VPMN, when the VPMN resides in the same country as the FPMN. FIGS. 17 and 18 illustrate various embodiments of mobile-terminated call on the MSISDN-F of the subscriber when the subscriber is registered in the VPMN. FIGS. 17A and 17B are a signal flow diagram representing a mobile terminated call to the MSISDN-F of the post-paid subscriber A, registered in the VPMN, in accordance with an embodiment of the present invention. At step 1702, GMSC-F 126 receives a call connection request, from subscriber B to the MSISDN-F of the post-paid subscriber A, in the form of a message, such as an ISUP IAM message, [IAM (B, MSISDN-F)]. Thereafter, at step 1704, GMSC-F 126 issues a routing query for the MSISDN-F to HLR-F 124, using a message such as, SRI (MSISDN-F). At step 1706, HLR-F 124 issues a roaming number request for the MSISDN-F such as, a PRN query, PRN (IMSI-H, MSISDN-F), to SG 108. Thereafter, at step 1708, SG 108 issues a routing query for the MSISDN-H to HLR-H 112, using an SRI query, [SRI (MSISDN-H)]. At step 1710, HLR-H 112 issues a PRN query for the MSISDN-H, PRN (IMSI-H, MSISDN-H), to VPMN VLR 1711, hereinafter, referred to as VLR-V 1711. VLR-V 1711 represents a current location of the subscriber in the VPMN. At step 1712, VLR-V 1711 returns the roaming number, i.e. an MSRN, to HLR-H 112 using a message, such as a PRN-ACK message, [PRN-ACK (MSRN)]. Thereafter, at step 1714, HLR-H 112 sends the MSRN to SG 108 in an SRI-ACK message, SRI-ACK (MSRN), as a response to the routing query received at step 1708.

Thereafter, at step 1716, SG 108 sends an MSRN' to HLR-F 124 as a PRN-ACK (MSRN') and maintains a mapping between the MSRN and the MSRN'. The MSRN' belongs to a range of MSRN allocated by HPMN 102 to SG 108. SG 108 issues the MSRN' to route the call through SG 108 in order to create billing records for the call. Thereafter, at step 1718, HLR-F 124 returns the MSRN' to GMSC-F 126 in an SRI-ACK (MSRN'), as a response to the routing query received at step 1704. Thereafter, at step 1720, GMSC-F 126 routes the call to GMSC-H 114, by sending a message, such as an ISUP IAM message, [IAM (B, MSRN')]. GMSC-H 114 is configured to issue an ISUP loop-back to SG 108 on the MSRN'. Therefore, at step 1722, GMSC-H 114 sends a call connection request, from the number B to the MSRN', to SG 108 using an ISUP IAM message, [IAM (B, MSRN')]. Thereafter, at step 1724, SG 108 returns the MSRN to GMSC-H 114, by sending a message, such as an ISUP IAM, [IAM (B, MSRN)]. Finally, at step 1726, GMSC-H 112 routes the call to VLR-V 1711, by sending an ISUP IAM message, [IAM (B, MSRN)].

HPMN 102 may implement IN protocol trigger on the MSRN' to SG 108 instead of ISUP trigger. In an embodiment of the present invention, at step 1722, GMSC-H 114 requests a call-completion instruction from SG 108 for the call from the number B to the MSRN', by sending a message, such as an INAP IDP message, [IDP (B, MSRN')]. Thereafter, at step 1724, SG 108 returns the MSRN to GMSC-H 114, by sending a message, such as an INAP Connect message, [Connect (B, MSRN)].

FIGS. 18A, 18B, and 18C are a signal flow diagram representing a mobile terminated call to the MSISDN-F of the pre-paid subscriber A registered in the VPMN, in accordance with an embodiment of the present invention. At step 1802, GMSC-F 126 receives a call connection request, from subscriber B to the MSISDN-F of the pre-paid subscriber A, in the form of a message, such as an ISUP IAM message, [IAM (B, MSISDN-F)]. Thereafter, at step 1804, GMSC-F 126 issues a routing query for the MSISDN-F to HLR-F 124, using an SRI query, [SRI (MSISDN-F)]. At step 1806, HLR-F 124 issues a PRN query for the MSISDN-F, PRN (IMSI-H, MSISDN-F), to SG 108. Thereafter, at step 1808, SG 108 issues a routing query for the MSISDN-H to HLR-H 112, using a message such as, SRI (MSISDN-H). At step 1810, HLR-H 112 issues a roaming number request using a message, such as a PRN query for the MSISDN-H, PRN (IMSI-H, MSISDN-H), to VLR-V 1711. VLR-V 1711 represents a current location of the subscriber in the VPMN. At step 1812, VLR-V 1711 returns the roaming number, i.e. an MSRN, to HLR-H 112 as a PRN-ACK (MSRN)]. Thereafter, at step 1814, HLR-H 112 sends the MSRN to SG 108, using an SRI-ACK message, SRI-ACK (MSRN), as a response to the routing query received at step 1808. Thereafter, at step 1816, SG 108 sends an MSRN' to HLR-F 124 in a PRN Acknowledgment message, [PRN-ACK (MSRN')] and maintains a mapping between the MSRN and the MSRN'. The MSRN' belongs to a range of MSRN allocated by HPMN 102 to SG 108. SG 108 issues the MSRN' to route the call through SG 108, to create billing records for the call. Thereafter, at step 1818, HLR-F 124 returns the MSRN' to GMSC-F 126, by sending, SRI-ACK (MSRN') to GMSC-F 126. Thereafter, at step 1820, GMSC-F 126 routes the call to GMSC-H 114, by sending a message, such as an ISUP IAM message, [IAM (B, MSRN')].

Thereafter, at step 1822, GMSC-H 114 sends a call connection request, from the number B to the MSRN', to SG 108 using a message, such as an ISUP IAM, [IAM (B, MSRN')]. At step 1824, SG 108 requests a call-completion instruction from SCP-H 1105, by sending a message, such as a CAP IDP message with the called number as the MSISDN-H, and the IMSI-H. Thereafter, at step 1826, SCP-H 1105 requests SG 108 to monitor a call-related event for billing purpose, by sending a message such as a CAP RRB message. The call-related event includes, but is not limited to, an answer event, a disconnect event, a busy event, and a no-answer event. Thereafter, at step 1828, SCP-H 1105 requests SG 108 to continue with the call, by sending a message, such as a CAP Continue message. Thereafter, at step 1830, SG 108 requests GMSC-H 114 to connect the call, by sending a message, such as an ISUP IAM message, [IAM (B, MSRN)].

Thereafter, at step 1832, GMSC-H 114 informs SG 108 of completion of the connection as a response for the ISUP IAM message received at step 1830, by sending a message, such as an ISUP ACM message. Thereafter, at step 1834, SG 108 relays the ISUP ACM message back to GMSC-H 114. Upon detecting establishment of the call, at step 1836, GMSC-H 114 informs SG 108 of the answer event, by sending a message, such as an ISUP ANM message. Thereafter, at step 1838, SG 108 informs SCP-H 1105 of the answer event, by sending a message such as a CAP ERB (ANS) message. Thereafter, SCP-H 1105 starts an accounting and a timer for pre-paid limit corresponding to the pre-paid subscriber A. Thereafter, at step 1840, SG 108 relays the ISUP ANM message back to GMSC-H 114. Furthermore, upon detecting disconnection of the call, at step 1842, GMSC-H 114 informs SG 108 of the disconnect event, by sending a message such as an ISUP REL message. Finally, at step 1844, SG 108 informs SCP-H 1105 of the disconnect event, by sending a message, such as a CAP ERB (Disconnect) message to SCP-H 1105. Thereafter, SCP-H 1105 stops the accounting and the timer corresponding to the pre-paid subscriber A.

HPMN 102 may implement IN protocol trigger on the MSRN' to SG 108, instead of ISUP trigger. In an embodiment of the present invention, at step 1822, GMSC-H 114 sends a call connection request, from the number B to the MSRN', to SG 108 using a message, such as an INAP IDP message, [IDP (B, MSRN')]. It would be apparent to a person skilled in the art, that after GMSC-H 114 and SG 108 further exchange various other INAP messages such as, but not limited to, an INAP RRB message, an INAP Continue message, and an INAP ERB message, to complete the call flow.

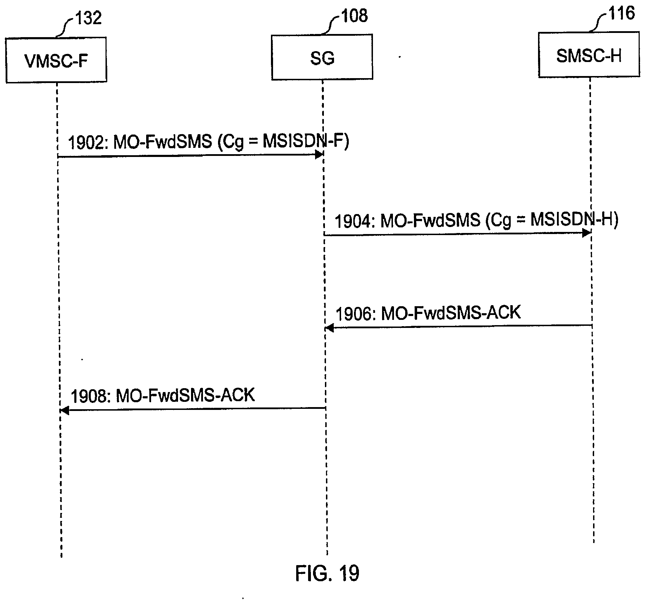

In various embodiments of the invention, system 100 facilitates mobile originated Short Message Service (SMS) service and mobile terminated SMS service corresponding to the MSISDN-H and the MSISDN-F associated with the subscriber. Whether the subscriber is a pre-paid or a post-paid subscriber, is transparent to SG 108. FIGS. 19 to 22 illustrate various embodiments corresponding to SMS services. FIG. 19 is a signal flow diagram representing a mobile originated SMS from the subscriber registered in FPMN 104, in accordance with an embodiment of the present invention. A mobile-originated SMS from the subscriber reaches VMSC-F 132. Thereafter, at step 1902, VMSC-F 132 sends the mobile-originated SMS to SG 108 using a message such as, Mobile Originated Forward Short Message Service (MO-FwdSMS) with a calling party number as the MSISDN-F. Thereafter, at step 1904, SG 108 relays the MO-FwdSMS message to SMSC-H 116. In an embodiment of the present invention, SG 108 replaces the calling party number to the MSISDN-H, when a called party number is an MSISDN of a country other than a country in which FPMN 104 resides. In another embodiment of the present invention, the subscriber may specifically indicate to SG 108 during subscription activation to retain the calling party number in the mobile-originated SMS, when the called party number is an MSISDN of a country other than the country in which FPMN 104 resides. In this case, SG 108 does not replace the calling party number. In another embodiment of the present invention, SG 108 prefixes the calling party number (i.e. the MSISDN-F) with a country code (CC) of the country in which FPMN 104 resides, when the called party number is an MSISDN of the country. Alternatively, subscriber A may specifically indicate SG 108 for a change in the CLI of the calling number A by adding a special prefix to the called number B. In an exemplary case, subscriber A adds "#" to the called number B. When subscriber A dials a prefixed called number (#-B), SG 108 retains the calling number as the MSISDN-F, if the called number B is a number of a country other than the country in which FPMN 104 resides. Otherwise, SG 108 replaces the calling number to the MSISDN-H. At step 1906, SMSC-H 116 acknowledges to SG 108 of receipt of the mobile originated SMS at step 1904, by sending a message such as, Mobile Originated Forward Short Message Service Acknowledgment (MO-FwdSMS-ACK). Finally, at step 1908, SG 108 relays the acknowledgement to VMSC-F 132 by sending a MO-FwdSMS-ACK message.

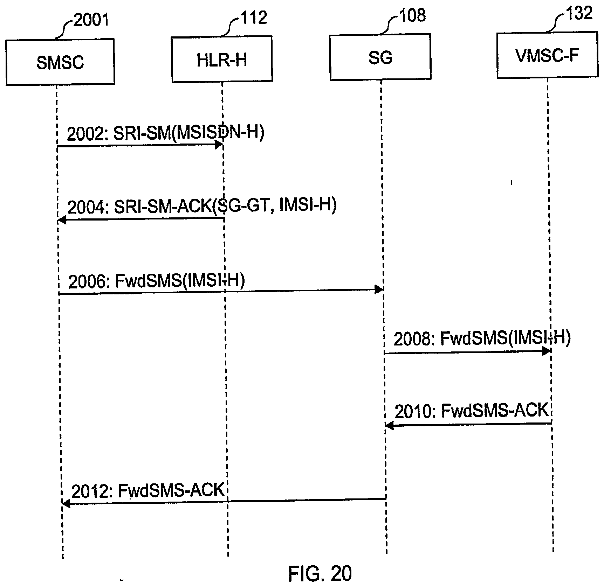

As mentioned before, system 100 allows the subscriber to receive an SMS on his MSISDN-H when registered in FPMN 104. FIG. 20 is a signal flow diagram representing a mobile terminated SMS to the MSISDN-H of the subscriber registered in FPMN 104, in accordance with an embodiment of the present invention. An SMS intended for the MSISDN-H reaches a Short Message Service Center (SMSC) 2001. SMSC 2001 resides in a network from where the SMS originates i.e. the calling party. At step 2002, SMSC 2001 issues a routing query for the MSISDN-H to HLR-H 112, using a message such as, a Send Routing Information for Short Message [SRI-SM (MSISDN-H)]. Thereafter, at step 2004, HLR-H 112 sends routing information to SMSC 2001, using a message such as, Send Routing Information for Short Message Acknowledgment (SRI-SM-ACK). The routing information includes an address of SG 108 and the IMSI-H. In an embodiment of the present invention, the address of SG 108 is the SG-GT. Thereafter, at step 2006, SMSC 2001 forwards the SMS intended for the MSISDN-H to SG 108, using a message such as, an FwdSMS message, [FwdSMS (IMSI-H)]. Thereafter, at step 2008 relays the SMS intended for the MSISDN-H to VMSC-F 132, by sending a message, such as FwdSMS (IMSI-H), to VMSC-F 132. VMSC-F 132 represents a current location of the subscriber in FPMN 104. At step 2010, VMSC-F 132 sends an acknowledgment of the forwarded SMS, using Forward Short Message Service Acknowledgment (FwdSMS-ACK), to SG 108. Finally, at step 2012, SG 108 relays the acknowledgment to SMSC 2001 in an FwdSMS-ACK message.

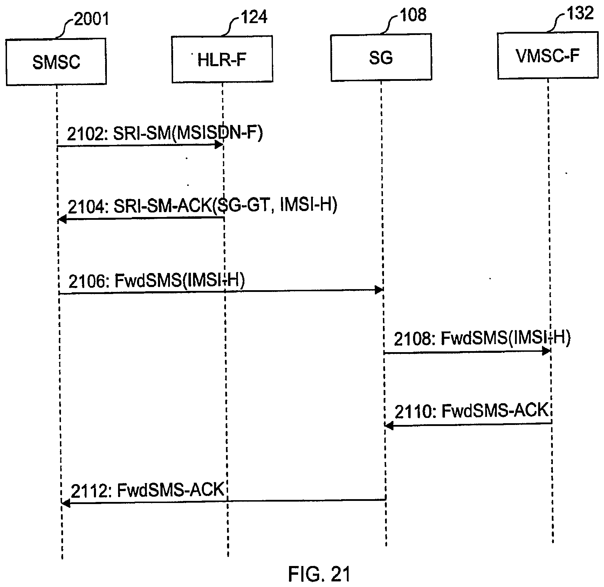

Since the subscriber has subscribed to SIMM service, he can also receive the SMS on his FPMN MSISDN. FIG. 21 is a signal flow diagram representing a mobile terminated SMS to the MSISDN-F of the subscriber registered in FPMN 104, in accordance with an embodiment of the present invention. An SMS intended for the MSISDN-F reaches SMSC 2001. SMSC 2001 resides in a network from where the SMS originates. At step 2102, SMSC 2001 issues a routing query for the MSISDN-F to HLR-F 124, using a message such as, a SRI-SM (MSISDN-F). Thereafter, at step 2104, HLR-F 124 sends routing information to SMSC 2001 in an SRI-SM-ACK message. The routing information includes an address of SG 108 and the IMSI-H. In an embodiment of the present invention, the address of SG 108 is the SG-GT. Thereafter, at step 2106, SMSC 2001 sends the SMS intended for the MSISDN-F to SG 108, using a message such as, an FwdSMS message, [FwdSMS (IMSI-H)]. Thereafter, at step 2108 relays the SMS intended for the MSISDN-F to VMSC-F 132, by sending a message, such as FwdSMS (IMSI-H). VMSC-F 132 represents a current location of the subscriber in FPMN 104. At step 2110, VMSC-F 132 sends an FwdSMS-ACK message, to SG 108, as an acknowledgment to receipt of the SMS intended for the MSISDN-F. Finally, at step 2112, SG 108 relays the acknowledgment to SMSC 2001, using a message, such as FwdSMS-ACK.

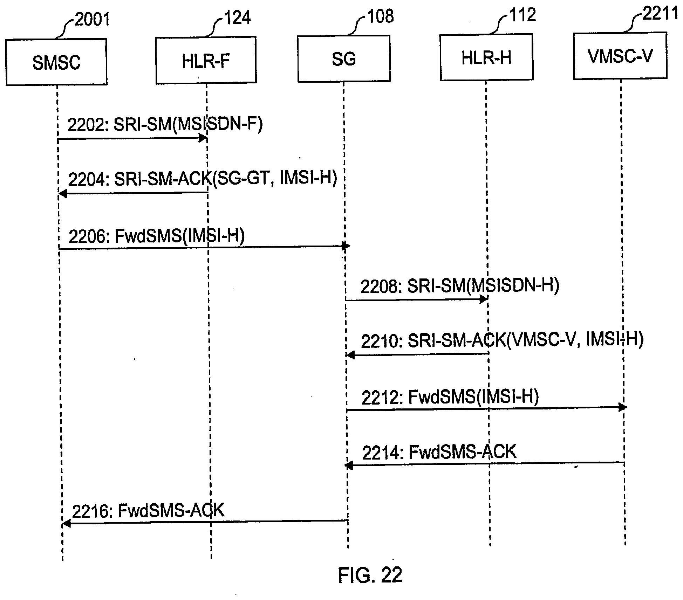

Further, the SIMM subscriber can also receive the SMS on his FPMN MSISDN while he is roaming in a VPMN. FIG. 22 is a signal flow diagram representing a mobile terminated SMS to the MSISDN-F of the subscriber registered in a VPMN, in accordance with an embodiment of the present invention. An SMS intended for the MSISDN-H reaches SMSC 2001. At step 2202, SMSC 2001 issues a routing query for the MSISDN-F to HLR-F 124, using a message such as, a SRI-SM (MSISDN-F). Thereafter, at step 2204, HLR-F 124 sends routing information to SMSC 2001 in an SRI-SM acknowledgment, SRI-SM-ACK. The routing information includes an address of SG 108 and the IMSI-H. In an embodiment of the present invention, the address of SG 108 is the SG-GT. Thereafter, at step 2206, SMSC 2001 forwards the SMS to SG 108, using a message such as, an FwdSMS message, [FwdSMS (IMSI-H)]. Thereafter, at step 2208, SG 108 issues a routing query for the MSISDN-H to HLR-H 112, using a SRI-SM (MSISDN-H)]. Thereafter, at step 2210, HLR-H 112 sends routing information to SG 108, using a message such as, Send Routing Information for Short Message Acknowledgment (SRI-SM-ACK). The routing information includes an address of VPMN VMSC (VMSC-V) 2211 and the IMSI-H. VMSC-V 2211 represents a current location of the subscriber in the VPMN. Thereafter, at step 2212, SG 108 sends the SMS intended for the MSISDN-F to VMSC-V 2211 in an FwdSMS message, [FwdSMS (IMSI-H)]. At step 2214, VMSC-V 2211 sends an FwdSMS Acknowledgment, FwdSMS-ACK, to SG 108, as a response to receipt of the SMS intended for the MSISDN-F. Finally, at step 2216, SG 108 relays the FwdSMS-ACK to SMSC 2001.

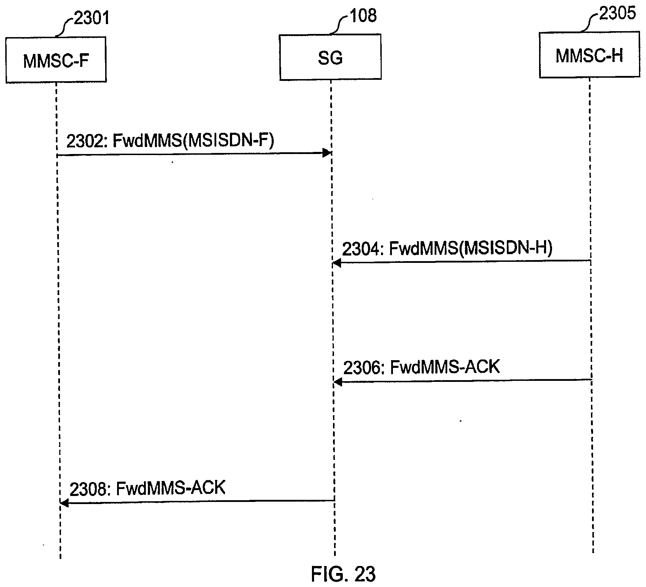

In addition to above mentioned embodiments, SIMM system also provides Multimedia Message Service (MMS) service corresponding to the MSISDN-H and the MSISDN-F associated with the subscriber. FIG. 23 is a signal flow diagram representing a mobile terminated MMS to the MSISDN-F of the subscriber registered in FPMN 104, in accordance with an embodiment of the present invention. The mobile terminated MMS intended for the MSISDN-F reaches an FPMN Multimedia Message Service Center (MMSC-F) 2301. At step 2302, MMSC-F 2301 sends the MMS intended for the MSISDN-F to SG 108 using a message such as, a Forward Multimedia Message Service message, [FwdMMS (MSISDN-F)]. In an embodiment of the present invention, MMSC-F 2301 sends the MMS to SG 108 over an MM4 interface. SG 108 replaces the MSISDN-F with the MSISDN-H. Thereafter, at step 2304, SG 108 relays the MMS to HPMN MMSC (MMSC-H) 2305 in an FwdMMS message, [FwdMMS (MSISDN-H)]. In an embodiment of the present invention, SG 108 sends the MMS to MMSC-H 2305 over an MM4 interface. At step 2306, MMSC-H 2305 sends an acknowledgment, Forward Multimedia Message Service Acknowledgment (FwdMMS-ACK), to SG 108, as a response to receipt of the MMS intended for the MSISDN-H. Finally, at step 2308, SG 108 relays FwdMMS-ACK to MMSC-F 2301. It will be apparent to a person skilled in the art, that other embodiments for mobile originated and mobile terminated MMS and other value added services on the MSISDN-H and the MSISDN-F of the subscriber follow similar call flows, described for mobile originated and mobile terminated SMS.

Furthermore, system 100 also provides supplementary services such as, but not limited to, Unstructured Supplementary Services Data (USSD) services, call-forwarding service, optimal call routing, facsimile service, Circuit Switched Data (CSD) services to the subscriber on the MSISDN-H and the MSISDN-F.

It will be apparent to a person skilled in the art, that the SIMM service can also be applied to CDMA/ANSI-41D, other technologies such as, but not limited to, VoIP, WiFi, 3GSM and inter-standard roaming. For example, a CDMA roaming subscriber traveling with an HPMN CDMA handset. Another example is, a CDMA roaming subscriber travels with an HPMN GSM SIM and a GSM handset. Yet another example is a GSM roaming subscriber traveling with an HPMN CDMA RUIM and a CDMA handset. To support these variations, the SG 108 will have an SS7 and a network interface corresponding to the HPMN network as well as an SS7 and a network interface to the FPMN network. It would be obvious to a person skilled in the art that these two interfaces in different directions may not have to be the same technologies. Further, there could be multiple types of interface in both directions.

An exemplary list of the mapping between GSM MAP and ANSI41D is described as a reference.

| **GSM MAP** | **ANSI 41D** |
|---|---|
| Location Update/ISD | REGNOT |
| Cancel Location | REGCAN |
| RegisterSS | FEATUREREQUEST |
| InterrogateSS | FEATUREREQUEST |
| SRI-SM | SMSREQ |
| SRI | LOCATION REQUEST |
| ForwardSMS | SMSDPP |
| ReadyForSMS | SMSNOTIFICATION |
| AlertServiceCenter | SMSNOTIFICATION |
| ReportSMSDelivery | SMDPP |
| ProvideRoamingNumber | ROUTING REQUEST |

The present invention can take the form of an entirely hardware embodiment, an entirely software embodiment, or an embodiment containing both hardware and software elements. In accordance with an embodiment of the present invention, the invention is implemented in software, which includes but is not limited to firmware, resident software, microcode, etc.

Furthermore, the invention can take the form of a computer program product, accessible from a computer-usable or computer-readable medium, providing program code for use by, or in connection with, a computer or any instruction execution system. For the purposes of this description, a computer-usable or computer readable medium can be any apparatus that can contain, store, communicate, propagate, or transport the program for use by, or in connection with, the instruction execution system, apparatus, or device.

The medium can be an electronic, magnetic, optical, electromagnetic, infrared, or semiconductor system (or apparatus or device), or a propagation medium. Examples of a computer-readable medium include a semiconductor or solid-state memory, magnetic tape, a removable computer diskette, a random access memory (RAM), a read-only memory (ROM), a rigid magnetic disk, and an optical disk. Current examples of optical disks include compact disk - read only memory (CDROM), compact disk - read/write (CD-R/W), and Digital Versatile Disk (DVD).

A computer usable medium provided herein includes a computer usable program code, which when executed, assigns one or more Mobile Station International Subscriber Directory Numbers (MSISDNs) to a subscriber of a Home Public Mobile Network (HPMN) upon receiving subscription activation message from the subscriber at a Signaling Gateway (SG). The computer usable medium further includes a computer usable program code for creating an association of the MSISDNs with the HPMN MSISDN to facilitate signaling corresponding to the HPMN MSISDN and the MSISDNs associated with the subscriber.

The SIMM system facilitates mobile communication corresponding to multiple MSISDNs of a subscriber of an HPMN with an associated HPMN IMSI without a need to change original HPMN SIM of the subscriber. Furthermore, when the subscriber is registered in an FPMN, the HPMN treats the subscriber as a local subscriber and provides the call-related and non call-related services on an HPMN MSISDN as well as FPMN MSISDN of the subscriber at a local rate. In addition, the SIMM system provides fail-over support to the subscriber when registered in the FPMN. If the SIMM system fails completely, the SIMM system allows normal roaming services to the subscriber. The SIMM system caters to both: pre-paid as well as post-paid subscribers. Even when the FPMN has no CAMEL relationship with the HPMN, the SIMM system provides CAMEL support to the subscriber.

The components of SIMM system described above include any combination of computing components and devices operating together. The components of the SIMM system can also be components or subsystems within a larger computer system or network. The SIMM system components can also be coupled with any number of other components (not shown), for example, other buses, controllers, memory devices, and data input/output devices, in any number of combinations. In addition, any number or combination of other processor-based components may be carrying out the functions of the SIMM system.

It should be noted that the various components disclosed herein may be described using computer aided design tools, and/or expressed (or represented) as data and/or instructions, embodied in various computer-readable media, in terms of their behavioral, register transfer, logic component, transistor, layout geometries, and/or other characteristics. Computer-readable media, in which such formatted data and/or instructions may be embodied, include, but are not limited to, non-volatile storage media in various forms (e.g., optical, magnetic or semiconductor storage media) and carrier waves that may be used to transfer such formatted data and/or instructions through wireless, optical, or wired signaling media or any combination thereof.

### Other Variations

Provided above for the edification of those of ordinary skill in the art, and not as a limitation on the scope of the invention, are detailed illustrations of a scheme for facilitating mobile communication corresponding to multiple MSISDNs of a subscriber of an HPMN with an associated HPMN IMSI. Numerous variations and modifications within the scope of the present invention will of course occur to those of ordinary skill in the art in view of the embodiments that have been disclosed. For example, the present invention is implemented primarily from the point of view of GSM mobile networks as described in the embodiments. However, the present invention may also be effectively implemented on GPRS, 3G, CDMA, WCDMA, WiMax etc., or any other network of common carrier telecommunications in which end users are normally configured to operate within a "home" network to which they normally subscribe, but have the capability of also operating on other neighboring networks, which may even be across international borders.

The examples under the present invention Single IMSI Multiple MSISDN (SIMM) system detailed in the illustrative examples contained herein are described using terms and constructs drawn largely from GSM mobile telephony infrastructure. However, use of these examples should not be interpreted as limiting the invention to those media. Single IMSI Multiple MSISDN System - a method for facilitating mobile communication corresponding to multiple MSISDNs of a subscriber of an HPMN with an associated HPMN IMSI can be of use and provided through any type of telecommunications medium, including without limitation: (i) any mobile telephony network including without limitation GSM, 3GSM, 3G, CDMA, WCDMA or GPRS, satellite phones or other mobile telephone networks or systems; (ii) any so-called WiFi apparatus normally used in a home or subscribed network, but also configured for use on a visited or non-home or non-accustomed network, including apparatus not dedicated to telecommunications such as personal computers, Palm-type or Windows Mobile devices; (iii) an entertainment console platform such as Sony Playstation, PSP or other apparatus that are capable of sending and receiving telecommunications over home or non-home networks, or even (iv) fixed-line devices made for receiving communications, but capable of deployment in numerous locations while preserving a persistent subscriber id such as the eye2eye devices from Dlink; or telecommunications equipment meant for voice over IP communications such as those provided by Vonage or Packet8.

In describing certain embodiments of the SIMM system under the present invention, this specification follows the path of a telecommunications call, from a calling party to a called party. For the avoidance of doubt, such a call can be a normal voice call, in which the subscriber telecommunications equipment is also capable of visual, audiovisual or motion-picture display. Alternatively, those devices or calls can be for text, video, pictures or other communicated data.

### APPENDIX

| **Acronym** | **Description** |
|---|---|
| 3G | Third generation of mobile |
| ACM | ISUP Address Completion Message |
| ANM | ISUP Answer Message |
| ANSI-41 | American National Standards Institute #41 |
| ATI | Any Time Interrogation |
| BCSM | Basic Call State Model |
| BSC | Base Station Controller |
| CAMEL | Customized Application for Mobile Enhanced Logic |
| CAP | Camel Application Part |
| CB | Call Barring |
| CC | Country Code |
| CDMA | Code Division Multiplexed Access |
| CdPA | Called Party Address |
| CgPA | Calling Party Address |
| CLI | Calling Line Identification |
| CSD | Circuit Switched Data |
| CSI | Camel Subscription Information |
| DPC | Destination Point Code |
| ERB | CAP Event Report Basic call state model |
| FPMN | Friendly Public Mobile Network |
| FTN | Forward-To-Number |
| GLR | Gateway Location Register |
| GMSC | Gateway MSC |
| GMSC-F | GMSC in FPMN |
| GMSC-H | GMSC in HPMN |
| GPRS | General Packet Radio System |
| GSM | Global System for Mobile |
| GSM SSF | GSM Service Switching Function |
| gsmSCF | GSM Service Control Function |
| GT | Global Title |
| HLR | Home Location Register |
| HLR-F | FPMN HLR |
| HLR-H | HPMN HLR |
| HPMN | Home Public Mobile Network |
| GTT | Global Title Translation |
| IAM | Initial Address Message |
| IDP | Initial DP IN/CAP message |
| IMSI | International Mobile Subscriber Identity |
| IMSI-H | HPMN IMSI |
| IN | Intelligent Network |
| INAP | Intelligent Network Application Part |
| INE | Interrogating Network Entity |
| IP | Internet Protocol |
| ISC | International Service Carrier |
| ISD | MAP Insert Subscriber Data |
| ISG | International Signal Gateway |
| ISTP | International STP |
| ISTP-F | ISTP connected to FPMN STP |
| ISTP-H | ISTP connected to HPMN STP |
| ISUP | ISDN User Part |
| ITR | Inbound Traffic Redirection |
| IVR | Interactive Voice Response |
| LU | Location Update |
| LUP | MAP Location Update |
| MAP | Mobile Application Part |
| MCC | Mobile Country Code |
| MCC | Mobile Country Code |
| ME | Mobile Equipment |
| MGT | Mobile Global Title |
| MMS | Multimedia Message Service |
| MMSC | Multimedia Message Service Center |
| MMSC-F | FPMN MMSC |
| MMSC-H | HPMN MMSC |
| MNC | Mobile Network Code |
| MO | Mobile Originated |
| MSC | Mobile Switching Center |
| MSISDN | Mobile Station International Subscriber Directory Number |
| MSISDN-F | FPMN MSISDN |
| MSISDN-H | HPMN MSISDN |
| MSRN | Mobile Station Roaming Number |
| MSRN-F | FPMN MSRN |
| MSRN-H | HPMN MSRN |
| MT | Mobile Terminated |
| MTP | Message Transfer Part |
| NDC | National Dialing Code |
| NP | Numbering Plan |
| NPI | Numbering Plan Indicator |
| O-CSI | Originating CAMEL Subscription Information |
| ODB | Operator Determined Barring |
| OTA | Over The Air |
| PRN | MAP Provide Roaming Number |
| PSI | MAP Provide Subscriber Information |
| RI | Routing Indicator |
| RNA | Roaming Not Allowed |
| RR | Roaming Restricted due to unsupported |
| | feature |
| RRB | CAP Request Report Basic call state model |
| SCCP | Signal Connection Control part |
| SCP | Signaling Control Point |
| SCP-H | HPMN SCP |
| SG | Signaling Gateway |
| SGSN | Serving GPRS Support Node |
| SGSN-F | FPMN SGSN |
| SIM | Subscriber Identity Module |
| SME | Short Message Entity |
| SM-RP-UI | Short Message Relay Protocol User Information |
| SMS | Short Message Service |
| SMSC | Short Message Service Center |
| SMSC-F | FPMN SMSC |
| SMSC-H | HPMN SMSC |
| SPC | Signal Point Code |
| SRI | MAP Send Routing Information |
| SRI-SM | MAP Send Routing Information For Short Message |
| SS | Supplementary Services |
| SS7 | Signaling System #7 |
| SSN | Sub System Number |
| SSP | Service Switch Point |
| STK | SIM Tool Kit Application |
| STP | Signal Transfer Point |
| STP-F | FPMN STP |
| STP-H | HPMN STP |
| TCAP | Transaction Capabilities Application Part |
| T-CSI | Terminating CAMEL Service Information |
| TP | SMS Transport Protocol |
| TR | Traffic Redirection |
| TT | Translation Type |
| UD | User Data |
| UDH | User Data Header |
| UDHI | User Data Header Indicator |
| USSD | Unstructured Supplementary Service Data |
| VAS | Value Added Service |
| VLR | Visited Location Register |
| VLR-F | FPMN VLR |
| VLR-H | HPMN VLR |
| VLR-V | VPMN VLR |
| VMSC | Visited Mobile Switching Center |
| VMSC-F | FPMN VMSC |
| VMSC-H | HPMN VMSC |
| VMSC-V | VPMN VMSC |
| VPMN | Visited Public Mobile Network |
| WAP | Wireless Access Protocol |

### Technical References

### GSM 902 on MAP specification

Digital cellular telecommunications system (Phase 2+);
Mobile Application Part (MAP) Specification
(3GPP TS 09.02 version 7.9.0 Release 1998)

### GSM 340 on SMS

Digital cellular telecommunications system (Phase 2+);
Technical realization of the Short Message Service (SMS);
(GSM 03.40 version 7.4.0 Release 1998)

### GSM 378 on CAMEL

Digital cellular telecommunications system (Phase 2+);
Customized Applications for Mobile network Enhanced Logic (CAMEL) Phase 2;
Stage 2
(GSM 03.78 version 6.7.0 Release 1997)

### GSM 978 on CAMEL Application protocol

Digital cellular telecommunications system (Phase 2+);
Customized Applications for Mobile network Enhanced Logic (CAMEL);
CAMEL Application Part (CAP) specification
(GSM 09.78 version 7.1.0 Release 1998)
Signalling procedures and the Mobile Application Part (MAP)
(Release 1999)
Q1214-Q1218 on Intelligent Networks
Q701-704 on SS7 MTP
Q711-Q714 on SS7 SCCP
Q760-Q769 on SS7 ISUP

## Claims

1. A method for mobile communications, the method comprising:
receiving a subscription activation message (402) from a subscriber at a Signaling Gateway (108), the subscriber being associated with a Home Public Mobile Network (102) and having a Home Public Mobile Network Subscriber Identity Module with a corresponding Home Public Mobile Network International Mobile Subscriber Identity and a corresponding Home Public Mobile Network Mobile Station International Subscriber Directory Number;
assigning (302) one or more Mobile Station International Subscriber Directory Numbers to the subscriber based on the subscription activation message; and
associating (304) the one or more Mobile Station International Subscriber Directory Numbers with the Home Public Mobile Network Mobile Station International Subscriber Directory Number to facilitate mobile originating and terminating services associated with the one or more Mobile Station International Subscriber Directory Numbers assigned to the subscriber.

2. The method of claim 1, further comprising:
storing the association of the one or more Mobile Station International Subscriber Directory Numbers with the Home Public Mobile Network Mobile Station International Subscriber Directory Number in a subscription data repository accessible by the Signaling Gateway (108).

3. The method of claim 1, wherein each of the one or more Mobile Station International Subscriber Directory Numbers corresponds to one or more Public Mobile Networks with which the Home Public Mobile Network has a roaming relationship.

4. The method of claim 1, wherein the Home Public Mobile Network has a Home Location Register (112), the method further comprising:
issuing, at the Signaling Gateway (108), a routing query to the Home Public Mobile Network Home Location Register (112) for retrieving the Home Public Mobile Network International Mobile Subscriber Identity corresponding to the subscriber.

5. The method of claim 1, wherein the subscription activation message (402) is a Short Message Service message or an Unstructured Supplementary Service Data message.

6. The method of claim 1, wherein the subscription activation message is received from one of the one or more Public Mobile Networks with which the Home Public Mobile Network has a roaming relationship or from a Visited Public Mobile Network.

7. The method of claim 1, wherein the subscription activation message is received from one of the one or more Public Mobile Networks with which the Home Public Mobile Network has a roaming relationship and wherein the one of the one or more Public Mobile Networks with which the Home Public Mobile Network has a roaming relationship is coupled to a Visited Location Register (130) and a Serving General packet radio service Support Node, the method further comprising:
issuing, at the Signaling Gateway (108), a cancel registration message to at least one selected from the group consisting of the Visited Location Register (130) and the Serving General packet radio service Support Node.

8. The method of claim 3, further comprising:
receiving, at the Signaling Gateway(108), mobile communications originating at the Home Public Mobile Network, directed to the one or more Public Mobile Networks with which the Home Public Mobile Network has a roaming relationship.

9. The method of claim 8, wherein the mobile communications include a Signaling Connection and Control Part message.

10. The method of claim 3, wherein the Signaling Gateway (108) has an address, the method further comprising:
registering the subscriber with one of the one or more Public Mobile Networks with which the Home Public Mobile Network has a roaming relationship;
receiving a mobile communication from the subscriber, the mobile communication having a calling party address; and
replacing (306) the calling party address with the Signaling Gateway address, wherein the Signaling Gateway address is associated with the Home Public Mobile Network.

11. The method of claim 3, wherein the Signaling Gateway (108) has an address, the method further comprising:
registering the subscriber with one of the one or more Public Mobile Networks with which the Home Public Mobile Network has a roaming relationship;
receiving a mobile communication from the subscriber, the mobile communication having a location address; and
replacing (308) the location address with the Signaling Gateway address, wherein the Signaling Gateway address is associated with the Home Public Mobile Network.

12. The method of claim 11, wherein the location address is selected from a group consisting of a Visited Location Register address, a Visited Mobile Switching Center address, and a Serving General packet radio service Support Node address.

13. The method of claim 3, wherein the subscriber has a Customized Applications for Mobile networks Enhanced Logic profile at the Home Public Mobile Network, the method further comprising:
facilitating receipt of the subscriber Customized Applications for Mobile networks Enhanced Logic profile at the Signaling Gateway;
wherein the subscriber is registered at one of the one or more Public Mobile Networks with which the Home Public Mobile Network has a roaming relationship; and
wherein the subscriber is a pre-paid subscriber.

14. A computer program product comprising a computer usable medium having control logic stored therein for causing a computer to perform mobile communications, the control logic comprising computer readable program code means for performing the method of any of claims 1-13.

15. A system for mobile communications, the system comprising:
receiving a subscription activation message (402) from a subscriber at a Signaling Gateway (108), the subscriber being associated with a Home Public Mobile Network (102) and having a Home Public Mobile Network Subscriber Identity Module with a corresponding Home Public Mobile Network International Mobile Subscriber Identity and a corresponding Home Public Mobile Network Mobile Station International Subscriber Directory Number;
assigning (302) one or more Mobile Station International Subscriber Directory Numbers to the subscriber based on the subscription activation message; and
associating (304) the one or more Mobile Station International Subscriber Directory Numbers with the Home Public Mobile Network Mobile Station International Subscriber Directory Number to facilitate mobile originating and terminating services associated with the one or more Mobile Station International Subscriber Directory Numbers assigned to the subscriber.

## Patentansprüche

1. Verfahren zur Mobilkommunikation, wobei das Verfahren Folgendes umfasst:
Empfangen einer Abonnementaktivierungsnachricht (402) von einem Abonnenten an einem Signalisierungsgateway (108), wobei der Abonnent einem öffentlichen Heimmobilnetz (102) zugeordnet wird und ein Abonnentenidentitätsmodul für das öffentliche Heimmobilnetz mit einer entsprechenden internationalen mobilen Abonnentenidentität für das öffentliche Heimmobilnetz und einer entsprechenden internationalen Mobilstationen-Abonnentenverzeichnisnummer für das öffentliche Heimmobilnetz besitzt;
Zuweisen (302) einer oder mehrerer internationaler Mobilstationen-Abonnentenverzeichnisnummern an den Abonnenten basierend auf der Abonnementaktivierungsnachricht; und
Zuordnen (304) der einen oder mehreren Mobilstationen-Abonnentenverzeichnisnummern zu der Mobilstationen-Abonnentenverzeichnisnummer für das öffentliche Heimmobilnetz, um mobiles Erzeugen und Beenden von Diensten zu erleichtern, die den einen oder mehreren dem Abonnenten zugewiesenen internationalen Mobilstationen-Abonnentenverzeichnisnummern zugeordnet sind.

2. Verfahren nach Anspruch 1, weiterhin umfassend:
Speichern der Zuordnung der einen oder mehreren internationalen Mobilstationen-Abonnentenverzeichnisnummern zu der Mobilstationen-Abonnentenverzeichnisnummer für das öffentliche Heimmobilnetz in einem Abonnementdatenrepositorium, auf welches das Signalisierungsgateway (108) zugreifen kann.

3. Verfahren nach Anspruch 1, wobei jede der einen oder mehreren internationalen Mobilstationen-Abonnentenverzeichnisnummern einem oder mehreren öffentlichen Mobilnetzen entspricht, mit denen das öffentliche Heimmobilnetz eine Roamingbeziehung besitzt.

4. Verfahren nach Anspruch 1, wobei das öffentliche Heimmobilnetz ein Heimstandortregister (112) besitzt, wobei das Verfahren weiterhin Folgendes umfasst:
Ausgeben einer Routinganfrage an das Heimstandortregister des öffentlichen Heimmobilnetzes (112) an dem Signalisierungsgateway (108) zum Abrufen der internationalen mobilen Abonnentenidentität für das öffentliche Heimmobilnetz, das dem Abonnenten entspricht.

5. Verfahren nach Anspruch 1, wobei die Abonnentenaktivierungsnachricht (402) eine SMS-Nachricht oder eine USSD-Nachricht ist.

6. Verfahren nach Anspruch 1, wobei die Abonnentenaktivierungsnachricht von einem der einen oder mehreren öffentlichen Mobilnetze, mit denen das öffentliche Heimmobilnetz eine Roamingbeziehung besitzt, oder von einem öffentlichen Fremdmobilnetz empfangen wird.

7. Verfahren nach Anspruch 1, wobei die Abonnentenaktivierungsnachricht von einem der einen oder mehreren öffentlichen Mobilnetze, mit denen das öffentliche Heimmobilnetz eine Roamingbeziehung besitzt, empfangen wird und wobei das eine der einen oder mehreren öffentlichen Mobilnetze, mit denen das öffentliche Heimmobilnetz eine Roamingbeziehung besitzt, mit einem Fremdstandortregister (130) und einem Dienstallgemeinpaketfunkdienstunterstützungsknoten gekoppelt ist, wobei das Verfahren weiterhin Folgendes umfasst:
Ausgeben einer Registrierungsabmeldungsnachricht an zumindest eines, ausgewählt aus der Gruppe, bestehend aus dem besuchten Standortregister (130) und dem Dienstallgemeinpaketfunkdienstunterstützungsknoten, an dem Signalisierungsgateway (108).

8. Verfahren nach Anspruch 3, weiterhin umfassend:
Empfangen von Mobilkommunikationen dem Signalisierungsgateway (108), die an dem öffentlichen Heimmobilnetz entsteht und an die einen oder mehreren öffentlichen Mobilnetze gerichtet ist, mit denen das öffentliche Heimmobilnetz eine Roamingbeziehung besitzt.

9. Verfahren nach Anspruch 8, wobei die Mobilkommunikation eine SCCP-Nachricht aufweist.

10. Verfahren nach Anspruch 3, wobei das Signalisierungsgateway (108) eine Adresse besitzt, wobei das Verfahren weiterhin Folgendes umfasst:
Registrieren des Abonnenten bei einem der einen oder mehreren öffentlichen Mobilnetze, mit denen das öffentliche Heimmobilnetz eine Roamingbeziehung besitzt;
Empfangen einer Mobilkommunikation von dem Abonnenten, wobei die Mobilkommunikation eine Anruferadresse besitzt; und
Ersetzen (306) der Anruferadresse durch die Adresse des Signalisierungsgateways, wobei die Adresse des Signalisierungsgateways dem öffentlichen Heimmobilnetz zugeordnet ist.

11. Verfahren nach Anspruch 3, wobei das Signalisierungsgateway (108) eine Adresse besitzt, wobei das Verfahren weiterhin Folgendes umfasst:
Registrieren des Abonnenten bei einem der einen oder mehreren öffentlichen Mobilnetze, mit denen das öffentliche Heimmobilnetz eine Roamingbeziehung besitzt;
Empfangen einer Mobilkommunikation von dem Abonnenten, wobei die Mobilkommunikation eine Standortadresse besitzt; und
Ersetzen (308) der Standortadresse durch die Adresse des Signalisierungsgateways, wobei die Adresse des Signalisierungsgateways dem öffentlichen Heimmobilnetz zugeordnet ist.

12. Verfahren nach Anspruch 11, wobei die Standortadresse aus einer Gruppe ausgewählt ist, bestehend aus einer Adresse eines Fremdstandortregisters, einer Adresse eines Fremdmobilschaltzentrums und einer Adresse eines Dienstallgemeinpaketfunkdienstunterstützungsknotens.

13. Verfahren nach Anspruch 3, wobei der Abonnent ein CAMEL-Profil an dem öffentlichen Heimmobilnetz besitzt, wobei das Verfahren weiterhin Folgendes umfasst:
Erleichtern des Empfangs des CAMEL-Profils des Abonnenten am Signalisierungsgateway;
wobei der Abonnent an einem oder mehreren der öffentlichen Mobilnetze, mit denen das öffentliche Heimmobilnetz eine Roamingbeziehung besitzt, registriert wird; und
wobei der Abonnent ein vorab bezahlender Abonnent ist.

14. Computerprogrammprodukt, umfassend ein computertaugliches Medium mit darauf gespeicherter Steuerlogik zum Auslösen, dass ein Computer Mobilkommunikation durchführt, wobei die Steuerlogik computerlesbare Programmcodemittel zum Durchführen des Verfahrens nach einem der Ansprüche 1-13 umfasst.

15. System zur Mobilkommunikation, wobei das System Folgendes umfasst:
Empfangen einer Abonnementaktivierungsnachricht (402) von einem Abonnenten an einem Signalisierungsgateway (108), wobei der Abonnent einem öffentlichen Heimmobilnetz (102) zugeordnet wird und ein Abonnentenidentitätsmodul für das öffentliche Heimmobilnetz mit einer entsprechenden internationalen mobilen Abonnentenidentität für das öffentliche Heimmobilnetz und einer entsprechenden internationalen Mobilstationen-Abonnentenverzeichnisnummer für das öffentliche Heimmobilnetz besitzt;
Zuweisen (302) einer oder mehrerer internationaler Mobilstationen-Abonnentenverzeichnisnummern an den Abonnenten basierend auf der Abonnementaktivierungsnachricht; und
Zuordnen (304) der einen oder mehreren Mobilstationen-Abonnentenverzeichnisnummern zu der Mobilstationen-Abonnentenverzeichnisnummer für das öffentliche Heimmobilnetz, um mobiles Erzeugen und Beenden von Diensten zu erleichtern, die den einen oder mehreren dem Abonnenten zugewiesenen internationalen Mobilstationen-Abonnentenverzeichnisnummern zugeordnet sind.

## Revendications

1. Procédé pour des communications mobiles, le procédé comprenant :
la réception d'un message d'activation d'abonnement (402) en provenance d'un abonné au niveau d'une passerelle de signalisation (108), l'abonné étant associé à un réseau mobile public de rattachement (102) et ayant un module d'identité d'abonné de réseau mobile public de rattachement avec une identité internationale d'abonné mobile correspondante de réseau mobile public de rattachement et un numéro d'annuaire d'abonné international de station de mobile correspondant de réseau mobile public de rattachement ;
l'attribution (302) d'un ou plusieurs numéros d'annuaire d'abonné internationaux de station de mobile à l'abonné sur la base du message d'activation d'abonnement ; et
l'association (304) des un ou plusieurs numéros d'annuaire d'abonné internationaux de station de mobile au numéro d'annuaire d'abonné international de station de mobile de réseau mobile public de rattachement pour faciliter des services mobiles au départ et à l'arrivée associés aux un ou plusieurs numéros d'annuaire d'abonné internationaux de station de mobile attribués à l'abonné.

2. Procédé selon la revendication 1, comprenant en outre :
le stockage de l'association des un ou plusieurs numéros d'annuaire d'abonné internationaux de station de mobile au numéro d'annuaire d'abonné international de station de mobile de réseau mobile public de rattachement dans un référentiel de données d'abonnement accessible par la passerelle de signalisation (108).

3. Procédé selon la revendication 1, dans lequel chacun des un ou plusieurs numéros d'annuaire d'abonné internationaux de station de mobile correspond à un ou plusieurs réseaux mobiles publics avec lesquels le réseau mobile public de rattachement a une relation d'itinérance.

4. Procédé selon la revendication 1, dans lequel le réseau mobile public de rattachement a une table de localisation de rattachement (112), le procédé comprenant en outre :
la fourniture, au niveau de la passerelle de signalisation (108), d'une interrogation de routage à la table de localisation de rattachement du réseau mobile public de rattachement (112) pour récupérer l'identité internationale d'abonné mobile de réseau mobile public de rattachement correspondant à l'abonné.

5. Procédé selon la revendication 1, dans lequel le message d'activation d'abonnement (402) est un message de service de minimessages ou un message de données de service supplémentaire non structuré.

6. Procédé selon la revendication 1, dans lequel le message d'activation d'abonnement est reçu d'un des un ou plusieurs réseaux mobiles publics avec lesquels le réseau mobile public de rattachement a une relation d'itinérance ou d'un réseau mobile public visité.

7. Procédé selon la revendication 1, dans lequel le message d'activation d'abonnement est reçu d'un des un ou plusieurs réseaux mobiles publics avec lesquels le réseau mobile public de rattachement a une relation d'itinérance et dans lequel l'un des un ou plusieurs réseaux mobiles publics avec lesquels le réseau mobile public de rattachement a une relation d'itinérance est couplé à un registre de localisation des visiteurs (130) et un noeud de support de service général de radiocommunication en mode paquet de desserte, le procédé comprenant en outre :
l'émission, au niveau de la passerelle de signalisation (108), d'un message d'enregistrement annulé vers au moins l'un sélectionné parmi le groupe constitué du registre de localisation des visiteurs (130) et du noeud de support de service général de radiocommunication en mode paquet de desserte.

8. Procédé selon la revendication 3, comprenant en outre :
la réception, au niveau de la passerelle de signalisation (108), des communications mobiles émises au départ du réseau mobile public de rattachement, dirigées vers les un ou plusieurs réseaux mobiles publics avec lesquels le réseau mobile public de rattachement a une relation d'itinérance.

9. Procédé selon la revendication 8, dans lequel les communications mobiles incluent un message de connexion de signalisation et de partie de commande.

10. Procédé selon la revendication 3, dans lequel la passerelle de signalisation (108) a une adresse, le procédé comprenant en outre :
l'enregistrement de l'abonné avec un des un ou plusieurs réseaux mobiles publics avec lesquels le réseau mobile public de rattachement a une relation d'itinérance ;
la réception d'une communication mobile en provenance de l'abonné, la communication mobile ayant une adresse d'appelant ; et
le remplacement (306) de l'adresse d'appelant par l'adresse de passerelle de signalisation, dans lequel l'adresse de passerelle de signalisation est associée au réseau mobile public de rattachement.

11. Procédé selon la revendication 3, dans lequel la passerelle de signalisation (108) a une adresse, le procédé comprenant en outre :
l'enregistrement de l'abonné avec l'un des un ou plusieurs réseaux mobiles publics avec lesquels le réseau mobile public de rattachement a une relation d'itinérance ;
la réception d'une communication mobile en provenance de l'abonné, la communication mobile ayant une adresse de localisation ; et
le remplacement (308) de l'adresse de localisation par l'adresse de passerelle de signalisation, dans lequel l'adresse de passerelle de signalisation est associée au réseau mobile public de rattachement.

12. Procédé selon la revendication 11, dans lequel l'adresse de localisation est sélectionnée parmi un groupe constitué d'une adresse de registre de localisation des visiteurs, d'une adresse de centre de commutation pour les services mobiles pour visiteurs, et d'une adresse de noeud de support de service général de radiocommunication en mode paquet de desserte.

13. Procédé selon la revendication 3, dans lequel l'abonné a des applications personnalisées pour un profil logique amélioré de réseaux mobiles au niveau du réseau mobile public de rattachement, le procédé comprenant en outre :
la facilitation de la réception des applications personnalisées d'abonné pour le profil logique amélioré de réseaux mobiles au niveau de la passerelle de signalisation ;
dans lequel l'abonné est enregistré auprès d'un des un ou plusieurs réseaux mobiles publics avec lesquels le réseau mobile public de rattachement a une relation d'itinérance ; et
dans lequel l'abonné est un abonné prépayé.

14. Produit-programme d'ordinateur comprenant un support utilisable par ordinateur dans lequel est stockée une logique de commande pour amener un ordinateur à réaliser des communications mobiles, la logique de commande comprenant un moyen de code de programme lisible par ordinateur pour réaliser le procédé selon l'une quelconque des revendications 1 à 13.

15. Système de communications mobiles, le système comprenant :
la réception d'un message d'activation d'abonnement (402) en provenance d'un abonné au niveau d'une passerelle de signalisation (108), l'abonné étant associé à un réseau mobile public de rattachement (102) et ayant un module d'identité d'abonné de réseau mobile public de rattachement avec une identité internationale d'abonné mobile correspondante de réseau mobile public de rattachement et un numéro d'annuaire d'abonné international de station de mobile correspondant de réseau mobile public de rattachement ;
l'attribution (302) d'un ou plusieurs numéros d'annuaire d'abonné internationaux de station de mobile à l'abonné sur la base du message d'activation d'abonnement ; et
l'association (304) des un ou plusieurs numéros d'annuaire d'abonné internationaux de station de mobile au numéro d'annuaire d'abonné international de station de mobile de réseau mobile public de rattachement pour faciliter des services mobiles au départ et à l'origine associés aux un ou plusieurs numéros d'annuaire d'abonné internationaux de station de mobile attribués à l'abonné.
